(19) Europäisches Patentamt
European Patent Office
Office européen des brevets

(11) Veröffentlichungsnummer: **0 192 213**
**B1**

(12) **EUROPÄISCHE PATENTSCHRIFT**

(45) Veröffentlichungstag der Patentschrift: **08.06.88**

(21) Anmeldenummer: **86101976.8**

(22) Anmeldetag: **17.02.86**

(51) Int. Cl.⁴: **C 09 B 67/22,** D 06 P 1/16 // C09B31/153, D06P3/54

(54) **Mischung gelber Dispersionsfarbstoffe.**

(30) Priorität: **21.02.85 DE 3505899**

(43) Veröffentlichungstag der Anmeldung: **27.08.86 Patentblatt 86/35**

(45) Bekanntmachung des Hinweises auf die Patenterteilung: **08.06.88 Patentblatt 88/23**

(84) Benannte Vertragsstaaten: **BE CH DE FR GB LI**

(56) Entgegenhaltungen:
**DE-A-1 961 784**
**DE-A-2 152 536**
**FR-A-2 038 229**
**FR-A-2 381 807**
**GB-A-2 013 232**

(73) Patentinhaber: **CASSELLA Aktiengesellschaft, Hanauer Landstrasse 526, D-6000 Frankfurt am Main 61 (DE)**

(72) Erfinder: **Hähnke, Manfred, Dr., Behringstrasse 13, D-6233 Kelkheim (DE)**
Erfinder: **Bühler, Ulrich, Dr., Kastanienweg 8, D-8755 Alzenau (DE)**
Erfinder: **Bode, Albert, Finkenweg 1, D-6231 Schwalbach (DE)**

(74) Vertreter: **Urbach, Hans- Georg, Dr., Hanauer Landstrasse 526, D-6000 Frankfurt am Main 61 (DE)**

EP 0 192 213 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Polyester (PES)-Fasern können mit Dispersionsfarbstoffen im Ausziehverfahren bekanntlich nach der Hochtemperatur-Methode (vorzugsweise bei 130° C) oder nach der Hochtemperatur-Methode (bei 95 - 100° C) sowie nach der Thermosol-Methode (vorzugsweise bei 210° C) gefärbt werden.

Für die Hochtemperatur-Methode und für die Thermosol-Methode kommen vorzugsweise Farbstoffe in Betracht, die ein hohes Niveau bei der Thermofixierechtheit (Trockenhitzefixierechtheit) aufweisen oder erzeugen.

In der Praxis benutzt man hierzu im Gelbbereich (Gelb, Gelbbraun, Goldgelb) ausgewählte Farbstoffe aus der Reihe der Monoazo-hydroxy-pyridon-Farbstoffe oder der Methinfarbstoffe. Farbstoffe dieser Reihen führen auf PES zu grünstichigen Gelbfärbungen. Durch die Nähe ihrer Extinktions- bzw. Remissions-Maxima zum nahen UV-Bereich weisen sie eine limitierte Farbstärke auf.

Es gibt Möglichkeiten, bei den Hydroxypyridon-Farbstoffen durch Übergang vom Monoazo- zum Disazo-Typ in den rotstichigen Gelbbereich oder Goldgelbbereich zu gelangen, und zwar zumeist unter deutlicher Zunahme der Farbstärke. Diese Farbstoffe zeigen jedoch bei der PES-Färbung nach der HT-Methode bzw. nach der Thermosol-Methode ein nicht ausreichendes Ziehvermögen, d. h. unter praxisüblichen Färbetemperaturen von 130 bzw. 210° C erhält man nur geringe bis mittlere Farbtiefen.

Andererseits weisen Färbungen von PES mit Disazo-hydroxypyridon-Farbstoffen eine außerordentlich hohe Trockenhitzefixier- und -plissierechtheit sowie eine außerordentlich geringe (also vorteilhafte) Thermomigration auf. Unter Thermomigration ist dabei die Verschlechterung der Naßechtheiten von Färbungen bei der Nachbehandlung mit Hochveredlungsmitteln, Weichmachern, Spulölen, Antistatika usw. während kurzer Zeit im Sekunden- oder Minuten-Bereich bei erhöhter Temperatur oder während langer Zeit im Monatsoder Jahres-Bereich bei Raumtemperatur zu verstehen.

Es wurde nun überraschenderweise gefunden, daß man unter Beibehaltung der hervorragenden Trockenhitzefixierechtheiten und Thermomigrations-Eigenschaften ein sehr gutes Ziehverhalten bei der HT- und Thermosol-Färbemethode von PES erhält, wenn man eine erfindungsgemäße Farbstoffmischung verwendet. Eine erfindungsgemäße Farbstoffmischung gelber Dispersionsfarbstoffe besteht aus den Farbstoffkomponenten A und B oder enthält diese Farbstoffkomponenten, wobei die Farbstoffkomponente A aus einem Farbstoff der Formel I

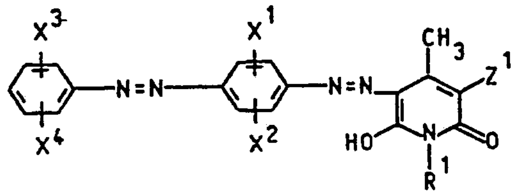
(I)

und die Farbstoffkomponente B aus einem oder mehreren anderen Farbstoffen der Formel I und/oder einem oder mehreren anderen gelben, goldgelben oder gelbbraunen Dispersionsfarbstoffen aus der Reihe der Monoazo-, Disazo- oder Methin-Farbstoffe besteht und

$R^1$: -H; Alkyl mit 1 bis 8 C-Atomen, das mit -Cl, -Br, -CN, Phenyl, ($C_1$-$C_4$)alkylsubstituiertem Phenyl, mit gegebenenfalls mit -Cl, -Br, Phenyl, -CN, ($C_1C_4$)Alkoxy, ($C_1$-$C_4$)Alk-oxy-($C_2$-$C_4$)alkoxy, Phenoxy, ($_3$-$C_5$)Alkenyloxy, Cyclopentyloxy oder Cyclohexyloxy substituiertem Alkoxycarbonyl mit 1 bis 4 C-Atomen in der Alkoxygruppe substituiert sein kann;

Alkyl mit 2 bis 4 C-Atomen, das mit Hydroxy, Alkoxy mit 1 bis 4 C-Atomen, Alkoxy-alkoxy mit insgesamt 2 bis 8 C-Atomen, gegebenenfalls mit ($C_1$-$C_6$)Alkyl, Cyclopentyl oder Cyclohexyl substituiertem Phenoxy, Alkenyloxy mit 3 bis 5 C-Atomen, Cyclopentyloxy, Cyclohexyloxy, Furfuryloxy, Tetrahydrofurfuryloxy, mit gegebenenfalls mit -Cl, -Br, -CN, Phenyl, Phenoxy, ($C_1$-$C_4$)Alkoxy substituiertem Alkylcarbonyloxy mit 1 bis 4 C-Atomen in der Alkylgruppe, mit gegebenenfalls mit -Cl, -Br, Methyl einfach oder unabhängig voneinander mehrfach substituiertem Phenylcarbonyloxy, gegebenenfalls mit -Cl, -Br, -CN, Phenyl, Phenoxy, ($C_1$-$C_4$)Alkoxy substituiertem Alkoxycarbonyloxy, mit gegebenenfalls mit -Cl, -Br, Methyl einfach oder unabhängig voneinander mehrfach substituiertem Phenoxycarbonyloxy, mit gegebenenfalls mit -Cl, -Br, Methyl einfach oder unabhängig voneinander mehrfach substituiertem Phenylaminocarbonyloxy, gegebenenfalls mit -OH, ($C_1$-$C_4$)Alkoxy oder Phenoxy in den Alkylresten substituiertes mono- oder dialkylsubstituiertes Aminocarbonyloxy mit 1 bis 4 C-Atomen in den Alkylresten substituiert sein kann; Alkenyl mit 3 bis 5 C-Atomen; Cyclopentyl; Cyclohexyl; gegebenenfalls substituiertes Phenyl; Phenylamino; Benzyl; Furfuryl; Tetrahydrofurfuryl; 1,1-Dioxotetrahydro-thienyl-(3);

$Z_1$ -CN oder -$CONR^2R^3$;

$X^1$ -H; Alkyl mit 1 bis 4 C-Atomen, das mit Hydroxy oder Alkoxy mit 1 bis 4 C-Atomen substituiert sein kann; Alkoxy mit 1 bis 4 C-Atomen; Alkoxy mit 2 bis 4 C-Atomen, das mit Hydroxy oder Alkoxy mit 1 bis 4 C-Atomen substituiert ist;

-F: -Cl; -Br,

$X^2$ -H; Alkyl mit 1 bis 4 C-Atomen; Alkoxy mit 1 bis 4 C-Atomen; Alkoxy mit 2 bis 4 C-Atomen, das mit Hydroxy oder Alkoxy mit 1 bis 4 C-Atomen substituiert ist; -F; -Cl; -Br; Alkylcarbonylamino mit 1 bis 4 C-Atomen im Alkylrest; -OH; -$NO_2$ oder

$X^1$ und $X^2$ zusammen

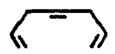

$X^3$ eine der Bedeutungen von $X^1$;

$X^4$ -H; Alkyl mit 1 bis 4 C-Atomen, das mit Hydroxy oder Alkoxy mit 1 bis 4 C-Atomen substituiert sein kann; Alkoxy mit 1 -bis 4 C-Atomen; Alkoxy mit 2 bis 4 C-Atomen, das mit Hydroxy oder Alkoxy mit 1 bis 4 C-Atomen substituiert ist; -F; -Cl; -Br; $NO_2$; $-CF_3$; CN; $-CONR^2R^3$; $-COOR^3$; $-COR^3$; $-SO_2-NR^2R^3$; $-SO_2-OR^3$; $-SO_2-R^3$; $-SO_2NH_2$;

5-$R^3$-substituiertes-1,2,4-Oxadiazol-3-yl;

$R^2$: -H; Alkyl mit 1 bis 8 C-Atomen; Alkyl mit 2 bis 4 C-Atomen, das mit Hydroxy oder Alkoxy mit 1 bis 4 C-Atomen oder Alkoxy-alkoxy mit insgesamt 2 bis 8 C-Atomen oder mit Allyloxy substituiert ist; gegebenenfalls substituiertes Alkenyl mit 3 bis 5 C-Atomen; gegebenenfalls substituiertes Phenyl oder Benzyl;

$R^3$: mit Ausnahme von Wasserstoff eine der Bedeutungen von $R^2$ und darüber hinaus Furfuryl oder Tetrahydrofurfuryl bedeuten und wobei das Gewichtsverhältnis der Komponenten A : B = (10 bis 90) : (90 bis 10) beträgt.

Vorzugsweise beträgt das Gewichtsverhältnis der Farbstoffkomponenten A : B = (20 bis 70) : (80 bis 30).

Die Farbstoffkomponente B enthält oder besteht vorzugsweise aus einem Farbstoff der Formel II

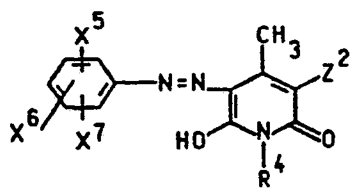

(II)

wobei die Substituenten folgende Bedeutungen besitzen:

$R^4$: eine der Bedeutungen von $R1^1$,

$Z^2$: eine der Bedeutungen von $Z^1$,

$X^5$: eine der Bedeutungen von $X^1$,

$X^6$:

eine der Bedeutungen von $X^4$ und darüber hinaus auch $-O-SO_2-NR^2R^3$; $-OSO_2R^3$; $-O-CO-R^3$; $-O-COOR^3$;

$X^7$: eine der Bedeutungen von $X^1$ und darüber hinaus gegebenenfalls substituiertes Phenoxy.

Die Farbstoffkomponente B kann aber vorzugsweise auch aus einem anderen Farbstoff oder mehreren anderen Farbstoffen der Formel I bestehen oder diese Farbstoffe enthalten, und/oder die Farbstoffkomponente B kann aus einem oder mehreren Farbstoffen der Formeln III bis IX bestehen oder diese Farbstoffe enthalten:

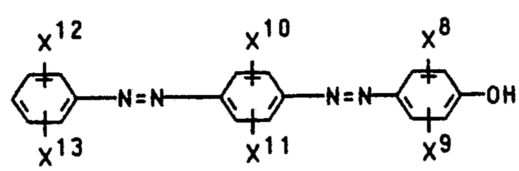

(III)

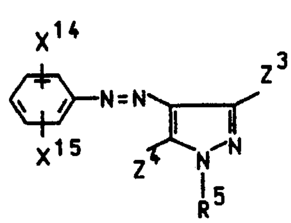

(IV)

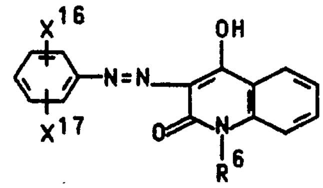

(V)

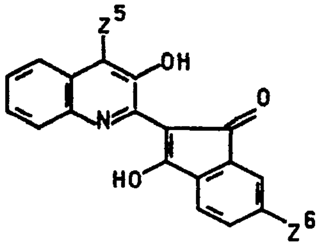

(VI)

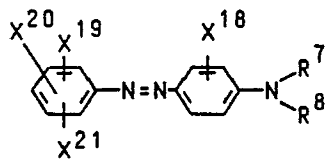

(VII)

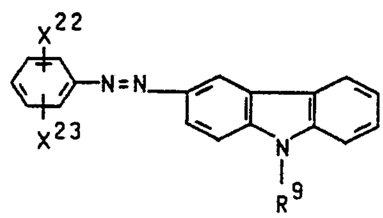

(VIII)

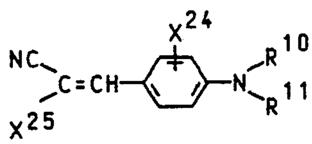

(IX)

In den Formeln III bis IX haben die Substituenten folgende Bedeutungen:

$R^5$: eine der Bedeutungen von $R^1$;
$R^6$: -H; Alkyl mit 1 bis 4 C-Atomen;
$R^7$: -H; Alkyl mit 1 bis 4 C-Atomen, das mit $-COOR^{12}$, -CN, Phenyl oder mit -Cl substituiert sein kann; Alkyl mit 2 bis 4 C-Atomen, substituiert mit Hydroxy, mit Alkoxy mit 1 bis 4 C-Atomen, mit Phenoxy oder mit $-OCO-R^{12}$.
$R^8$: eine der Bedeutungen von $R^7$ und darüber hinaus Phenyl;
$R^9$: -H; Alkyl mit 1 bis 4 C-Atomen, das mit $-COOR^{12}$ oder mit -CN substituiert sein kann; Alkyl mit 2 bis 4 C-Atomen, substituiert mit Hydroxy, mit Alkoxy mit 1 bis 4 C-Atomen, mit Hydroxyalkyloxy mit 2 bis 4 C-Atomen, mit Alkoxy-alkoxy mit insgesamt 2 bis 8 C-Atomen, mit Alkoxy-alkoxy-alkoxy mit insgesamt 3 bis 12 C-Atomen;
$R^{10}$: eine der Bedeutungen von $R^7$;
$R^{11}$: -H; Alkyl mit 1 bis 4 C-Atomen; Alkyl mit 2 bis 4 C-Atomen, substituiert mit -Cl oder mit dem Rest Y;
$R^{12}$: Alkyl mit 1 bis 4 C-Atomen; Alkyl mit 2 bis 4 C-Atomen, substituiert mit Alkoxy mit 1 bis 4 C-Atomen, mit Phenoxy, mit Allyloxy oder mit -OH;
$X^8$: eine der Bedeutungen von $X^1$;
$X^9$: -H; Alkyl mit 1 bis 4 C-Atomen;
$X^{10}$: -H; Alkyl mit 1 bis 4 C-Atomen; Alkoxy mit 1 bis 4 C-Atomen; Alkoxy mit 2 bis 4 C-Atomen, substituiert mit -OH, mit Alkoxy mit 1 bis 4 C-Atomen; -F; -Cl; -Br;
$X^{11}$: eine der Bedeutungen von $X^{10}$ und zusätzlich Alkylcarbonylamino mit 1 bis 4 C-Atomen im Alkylrest, oder

$X^{10}$ und $X^{11}$ zusammen 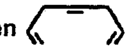 ;

$X^{12}$: eine der Bedeutungen von $X^1$;
$X^{13}$: eine der Bedeutungen von $X^2$;
$X^{14}$: eine der Bedeutungen von $X^6$ und zusätzlich gegebenenfalls substituiertes Phenoxy;
$X^{15}$: eine der Bedeutungen von $X^1$ und zusätzlich $-NO_2$ oder Phenylazo;
$X^{16}$: -H; $-NO_2$; Alkyl mit 1 bis 4 C-Atomen; Phenylazo; Phenylazo, im Phenylkern ein- oder zweimal mit -Cl, $-CH_3$, $-OCH_3$ und/oder $-NO_2$ substituiert;
$X^{17}$: -H; -F; -Cl; -Br; Alkyl mit 1 bis 4 C-Atomen; Alkoxy mit 1 bis 4 C-Atomen; Alkoxy mit 2 bis 4 C-Atomen, substituiert mit Alkoxy mit 1 bis 4 C-Atomen;
$X^{18}$: -H; -Cl; -Br; Alkyl mit 1 bis 4 C-Atomen; Alkylcarbonylamino mit 1 bis 4 C-Atomen im Alkylrest, der gegebenenfalls mit -Cl, -Br, -OH oder Alkoxy mit 1 bis 4 C-Atomen substituiert sein kann;
$X^{19}$: $-NO_2$; $-CONR^2R^3$; $-SO_2NR^2R^3$; $-SO_2-OR^3$; $-COR^3$; $-COOR^3$; -CN; $-CF_3$;
$X^{20}$: -H; $-COOR^3$; -Cl; -Br; CN; $-NO_2$;
$X^{21}$: -H, -Cl; -Br;
$X^{22}$: $-NO_2$; $-COOR^3$; $-CONR^2R^3$; $SO_2NR^2R^3$; $-COR^3$; $-SO_2-OR^3$;
$X^{23}$: -H; -F; -Cl; -Br; -CN;
$X^{24}$: -H; -F; -Cl; -Br; Alkyl mit 1 bis 4 C-Atomen; Alkoxy mit 1 bis 4 C-Atomen; Alkoxy mit 2 bis 4 C-Atomen, substituiert mit Alkoxy mit 1 bis 4 C-Atomen;
$X^{25}$:
-CN; $-COOR^3$; $CONR^2R^3$;
Y: -O-Phenyl, wobei der Phenylrest gegebenenfalls mit Cyclopentyl, Cyclohexyl, Alkyl mit 1 bis 4 C-Atomen und/oder Alkoxy mit 1 bis 4 C-Atomen, mit -Cl und/oder -Br mono-oder disubstituiert ist; -CO-Phenyl, wobei der Phenylrest gegebenenfalls mit Cyclopentyl, Cyclohexyl, Alkyl mit 1 bis 4 C-Atomen und/oder Alkoxy mit 1 bis 4 C-Atomen, mit -Cl und/oder -Br mono- oder disubstituiert ist; -O-CO-Phenyl, wobei der Phenylrest gegebenenfalls mit Cyclopentyl, Cyclohexyl, Alkyl mit 1 bis 4 C-Atomen und/oder Alkoxy mit 1 bis 4 C-Atomen, mit -Cl und/oder -Br mono- oder disubstituiert ist; -COO-Phenyl, wobei der Phenylrest gegebenenfalls mit Cyclopentyl, Cyclohexyl, Alkyl mit 1 bis 4 C-Atomen und/oder Alkoxy mit 1 bis 4 C-Atomen, mit -Cl und/oder -Br mono- oder disubstituiert ist; -O-COO-Phenyl, wobei der Phenylrest gegebenenfalls mit Cyclopentyl, Cyclohexyl, Alkyl mit 1 bis 4 C-Atomen und/oder Alkoxy mit 1 bis 4 C-Atomen, mit -Cl und/oder -Br mono- oder disubstituiert ist; -O-CO-NH-Phenyl, wobei der Phenylrest gegebenenfalls mit Cyclopentyl, Cyclohexyl, Alkyl mit 1 bis 4 C-Atomen und/oder Alkoxy mit 1 bis 4 C-Atomen, mit -Cl und/oder -Br mono- oder disubstituiert ist; -S-Benzthiazolyl (2);
$Z^3$: Alkyl mit 1 bis 4 C-Atomen; $-CONH_2$; $-CONH(C_1-C_4Alkyl)$; $-CON(C_1-C_4Alkyl)$ $(C_1-C_4Alkyl)$;
$Z^4$: -OH; $-NH_2$;
$Z^5$: -H; -Br; -Cl;
$Z^6$: -H; $-CONH_2$; $-CONH(C_1-C_4Alkyl)$; $-CON(C_1-C_4Alkyl)-(C_1-C_4Alkyl)$.

Die in den Substituenten auftretenden Alkyl-, Alkenyl- und Alkoxyreste können, auch wenn sie als Substituenten anderer Substituenten auftreten, geradkettig oder verzweigt sein.

Beispiele für geeignete Alkylreste, insbesondere für $R^1$, $R^2$, $R^3$ oder $R^4$ sind: Methyl, Ethyl, n-Propyl, i-Propyl, n-Butyl, i-Butyl, sec.-Butyl, tert.-Butyl, n-Pentyl, i-Pentyl, n-Hexyl, i-Hexyl, 2,3-Dimethyl-butyl, n-Heptyl, i-Heptyl, n-Octyl, i-Octyl, 3-Methyl-heptyl.

Beispiele für geeignete Alkenylreste für $R^1$, $R^2$, $R^3$ oder $R^4$ sind: Allyl, Methallyl, 2-Butenyl, 3-Butenyl, 2-Pentenyl, 3-Pentenyl, 4-Pentenyl.

Das für $R^2$ und/oder $R^3$ stehende Phenyl kann z. B. durch -Br, -Cl und/oder Alkyl mit 1 bis 4 C-Atomen ein- oder mehrfach substituiert sein. Eine Einfachsubstitution ist bevorzugt. Vorzugsweise ist nur einer der beiden Reste $R^2$ und $R^3$ gegebenenfalls substituiertes Phenyl oder Benzyl.

Der für $R^1$ und/oder $R^4$ stehende Phenylrest kann z. B. mit Alkyl mit 1 - 4 C-Atomen und/oder Alkoxy mit 1 - 4 C-Atomen und/oder -OH, und/oder -Cl und/oder -Br mono- oder disubstituiert sein. Eine Monosubstitution ist bevorzugt.

Der Rest $R^1$ bedeutet bevorzugt: Alkyl mit 1 - 8 C-Atomen; Alkyl mit 1 bis 5 C-Atomen, das mit Alkoxycarbonyl mit 1 bis 4 C-Atomen, insbesondere 1 bis 2 C-Atomen, im Alkoxyrest substituiert ist; Alkyl mit 2 bis 8 C-Atomen, das mit Hydroxy, Alkoxy mit 1 - 4 C-Atomen, Alkylcarbonyloxy mit 1-4 C-Atomen, insbesondere 1 oder 2 C-Atomen im Alkylrest, substituiert ist.

Der Rest $R^1$ bedeutet besonders bevorzugt: Alkyl mit 2 bis 4 C-Atomen, das mit Alkoxy mit 1 - 4 C-Atomen substituiert ist; 2-Methylcarbonyloxyethyl, 2-Ethylcarbonyloxyethy.

Der Rest $R^1$ bedeutet ganz besonders bevorzugt $3-(C_1-C_4)$Alkoxy-n-propyl. Ganz besonders bevorzugte erfindungsgemäße Farbstoffmischungen enthalten 2 oder 3 Farbstoffe der Formel I, die alle für $R^1$ die ganz besonders orzugte Bedeutung $3-(C_1-C_4)$Alkoxy-n-propyl besitzen. Die einzelnen Reste für $R^1$ werden dabei so ausgewählt, daß bei 2 Farbstoffen der Formel I die Summe der Kohlenstoffzahl in den Alkoxygruppen der $3-(C_1-C_4)$Alkoxy-n-propyl-Reste mindestens 4 und bei 3 oder mehr Farbstoffen der Formel I mindestens 6 beträgt.

Der Rest $R^4$ besitzt vorzugsweise eine der bevorzugten Bedeutungen für $R^1$ und zusätzlich Phenylamino und -H.

Der Rest $R^4$ bedeutet ganz besonders bevorzugt -H; Alkyl mit 1 bis 4 C-Atomen, das mit Alkoxycarbonyl mit 1 bis 4 C-Atomen, insbesondere 1 oder 2 C-Atomen, substituiert sein kann; 2-Ethylhexyl; Alkyl mit 2 bis 4 C-Atomen, substituiert mit Alkoxy mit 1 bis 4 C-Atomen, mit Methylcarbonyloxy oder mit Ethylcarbonyloxy.

Bei dem für $X^4$ stehenden Rest $-COR^3$ bedeutet $R^3$ vorzugsweise Alkyl mit 1 bis 4 C-Atomen. Bei dem für $X^6$ stehenden Rest $-COR^3$ bedeutet $R^3$ vorzugsweise Phenyl, Chlorphenyl, $(C_1$-$C_4)$Alkyl-phenyl. Beispiele für derartige in $-COR^3$ vorkommende bevorzugte Reste $R^3$ sind: Methyl, Ethyl, n-Propyl, i-Propyl, n-Butyl, sec-Butyl, 4-Chlor-phenyl, 4-Methylphenyl und besonders bevorzugt 4-i-Propylphenyl.

Bei dem für $Z^1$ und/oder $Z^2$ stehenden Rest $-CONR^2R^3$ und bei den für $X^4$ und/oder $X^6$ stehenden Resten $-CONR^2R^3$, $-COOR^3$, $-SO_2NR^2R^3$ und $-SO_2$-$R^3$ haben die Substituenten $R^2$ und $R^3$ bevorzugt die nachfolgend angegebenen Bedeutungen:

Alkyl mit 1 - 8 C-Atomen, Alkyl mit 2 bis 4 C-Atomen, das mit Hydroxy oder Alkoxy mit 1 bis 4 C-Atomen oder Alkoxyalkoxy mit insgesamt 2 bis 8 C-Atomen, mit Allyloxy oder mit Alkylcarbonyloxy mit 1 bis 3 C-Atomen im Alkylrest substituiert ist. Bevorzugt für derartige Reste sind z. B. Methyl, Ethyl, n-Propyl, i-Propyl, n-Butyl, i-Butyl, sec-Butyl, 2-Ethylhexyl, 2-Hydroxyethyl, 3-Methoxy-, 3-Ethoxy-, 3-n-Propoxy-, 3-i-Propoxy-, 3-n-Butoxy- und 3-i-Butoxy-propyl, 2-Acetoxy-ethyl, 2-n-Propoxy-ethyl. Für $R^2$ ist in den Resten $-CONR^2R^3$ und $-SO_2NR^2R^3$ auch Wasserstoff bevorzugt. In den für $X^6$ stehenden Resten $-CONR^2R^3$, $-SO_2NR^2R^3$, $-COOR^3$, $-SO_2OR^3$ und $-SO_2R^3$ ist $R^3$ bevorzugt auch Phenyl, Chlorphenyl oder Methylphenyl. In Kombination dazu stehendes $R^2$ ist dann bevorzugt -H.

Ein bevorzugter Rest $R^3$ im Substituenten $-COOR^3$ ist weiter Furfuryl oder Tetrahydrofurfuryl.

Für die Reste $Z^1$ und/oder $Z^2$ ist -CN bevorzugt.

Ferner bedeuten vorzugsweise

$X^1$, $X^5$: -H; Alkyl mit 1 bis 4 C-Atomen; Alkoxy mit 1 bis 4 C-Atomen; Alkoxy mit 2 bis 4 C-Atomen, das durch Alkoxy mit 1 bis 4 C-Atomen substituiert ist; -F; -Cl; -Br;

$X^2$: -H; Alkyl mit 1 bis 4 C-Atomen; -Cl; -Br; $-NO_2$, oder $X^1$ und $X^2$ zusammen auch 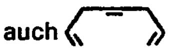 ;

$X^3$: -H; Alkyl mit 1 bis 4 C-Atomen; Alkoxy mit 1 bis 4 C-Atomen; Alkoxy mit 2 bis 4 C-Atomen, das mit Alkoxy mit 1 bis 2 C-Atomen substituiert ist; -F; -Cl; -Br;

$X^4$: -H; -F; -Cl; -Br; $-NO_2$; Alkyl mit 1 bis 4 C-Atomen; $-COOR^3$, wobei $R^3$ Alkyl mit 1 bis 4 C-Atomen oder Alkyl mit 2 bis 4 C-Atomen bedeutet, das mit Alkoxy mit 1 bis 4 C-Atomen substituiert ist;

$X^6$: -H; $-NO_2$; -Cl; Alkyl mit 1 bis 4 C-Atomen; Alkyl mit 2 bis 4 C-Atomen, substituiert mit Alkoxy mit 1 bis 4 C-Atomen oder mit Allyloxy; $-SO_2NR^2R^3$; $-COR^3$; $-CONR^2R^3$; $-SO_2NH_2$; $-COOR^3$; $-OSO_2R^3$; $-OCO$-$R^3$; $-OSO_2NR^2R^3$;

$X^7$: -H; Alkyl mit 1 bis 4 C-Atomen; Phenoxy;

$X^8$: -H; Alkyl mit 1 bis 4 C-Atomen; -Cl; -Br; Alkoxy mit 1 bis 4 C-Atomen; Alkoxy mit 2 bis 4 C-Atomen, das mit Hydroxy oder Alkoxy mit 1 bis 4 C-Atomen substituiert ist;

$X^9$: -H; -Cl; Alkyl mit 1 bis 4 C-Atomen;

$X^{10}$: -H; Alkyl mit 1 bis 4 C-Atomen; Alkoxy mit 1 bis 4 C-Atomen; Alkoxy mit 2 bis 4 C-Atomen substituiert mit Alkoxy mit 1 bis 4 C-Atomen;

$X^{11}$: wie $X^{10}$ und darüber hinaus -Cl; OH, oder $X^{10}$ und $X^{11}$ zusammen auch 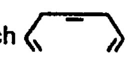 ;

$X^{12}$; -H; $-NO_2$; -OH; Alkyl mit 1 bis 4 C-Atomen; Alkoxy mit 1 bis 4 C-Atomen; Hydroxyalkoxy mit 2 bis 4 C-Atomen, Alkylcarbonylamino mit 1 bis 4 C-Atomen im Alkylrest;

$X^{13}$: -H; Alkyl mit 1 bis 4 C-Atomen;

$X^{14}$: -H; $-NO_2$, Alkyl mit 1 bis 4 C-Atomen; Alkoxy mit 1 bis 4 C-Atomen; $-COOR^3$; $-SO_2NR^2R^3$;

$X^{15}$: -H; $-NO_2$; -Cl; Phenylazo;

$X^{16}$: -H; $-NO_2$; Phenylazo; Alkyl mit 1 bis 4 C-Atomen;

$X^{17}$: -H; -Cl; -Br; -F; Alkyl mit 1 bis 4 C-Atomen; Alkoxy mit 1 bis 4 C-Atomen;

$X^{18}$: -H; -Cl; Alkyl mit 1 bis 4 C-Atomen; Alkylcarbonylamino mit 1 bis 4 C-Atomen im Alkylrest, das mit Alkoxy mit 1 bis 4 C-Atomen substituiert sein kann;

$X^{19}$: $-NO_2$; Alkoxy-carbonyl mit 1 bis 4 C-Atomen im Alkoxyrest; $-SO_2N(C_1$-$C_4$Alkyl) $(C_1$-$C_4$Alkyl); Alkoxy-sulfonyl mit 1 bis 4 C-Atomen im Alkoxyrest;

$X^{20}$: -H; -Cl; -Br, -CN; $-NO_2$;

$X^{21}$: -H; -Cl; -Br;

$X^{22}$: $-NO_2$; -Cl;

$X^{23}$: -H; -F; -Cl; -Br; Alkyl mit 1 bis 4 C-Atomen;

$X^{24}$: -H; -Cl; Alkyl mit 1 bis 4 C-Atomen; Alkoxy mit 1 bis 4 C-Atomen;

$X^{25}$: -CN, Alkoxycarbonyl mit 1 bis 4 C-Atomen, das mit Alkoxy mit 1 bis 4 C-Atomen, Phenoxy oder Phenyl substituiert sein kann;

$R^5$: -H; Alkyl mit 1 bis 4 C-Atomen; Phenyl; Hydroxyphenyl; 1,1-Dioxo-tetrahydro-thiophen-3-yl; Alkyl mit 2 bis 4 C-Atomen substituiert mit Phenylaminocarbonyloxy;

$R^7$: -H; Alkyl mit 1 bis 4 C-Atomen; Benzyl; $(C_1$-$C_4)$Alkoxy-carbonyl-$(C_1$-$C_4)$alkyl; Alkyl mit 2 bis 4 C-Atomen, das vorzugsweise in Endstellung mit Hydroxy, $(C_1$-$C_4$Alkyl)-carbonyloxy, -CN, -Cl, Phenyl, $_1$-$C_4$Alkoxy, Phenoxy, $(C_1$-$C_4$Alkoxy)-carbonyloxy oder mit Phenoxy-$(C_1$-$C_4$-alkyl)-carbonyloxy substituiert ist;

$R^8$: mit Ausnahme von -H eine der Bedeutungen von $R^7$ und darüber hinaus auch Phenyl oder Benzyl;

$R^9$, $R^{10}$: H; Alkyl mit 1 bis 4 C-Atomen;

$R^{11}$: 2-(Phenoxy)ethyl; 2-(Cyclohexyl oder Cyclopentylphenoxy)-ethyl; 2-(Di-chlorophenylaminocarbonyloxy)-ethyl; 2-(Phenylaminocarbonyloxy)-ethyl; 2-Chloro-ethyl; $-(CH_2)_2$-S-benzthiazolyl (2);

$Z^3$: Alkyl mit 1 bis 4 C-Atomen; $-CONH_2$.

Besonders bevorzugt bedeuten:

$X^1$: -H; -Cl; -F; Methyl; Methoxy;
$X^2$: -H; -Cl; $-NO_2$; Methyl;
$X^3$: -H; Methyl; Methoxy; Ethoxy; -F; -Cl; -Br;
$X^4$: -H; -Cl; Methyl; $-NO_2$; $-COOCH_3$; $-COOC_2H_5$; $-COO(CH_2)_2OCH_3$; $-COO(CH_2)_2OC_2H_5$;
$X^5$: -H; -Cl; Methyl; Methoxy;
$X^6$: -H; -Cl; $-NO_2$; Methyl; $-SO_2NH_2$; $-CONH(C_2\text{-}C_8Alkyl)$; $-COO(C_2\text{-}C_8Alkyl)$; $-SO_2NH(C_2\text{-}C_8Alkyl)$; Furylmethyloxycarbonyl; $-COO(CH_2)_2OCH_2CH{=}CH_2$; Benzylcarbonyloxy; $-OSO_2\text{-}C_6H_5$; $-OSO_2\text{-}N(CH_3)_2$; $-CO\text{-}C_6H_5$, wobei der Phenylrest auch mit Alkyl mit 1 bis 4 C-Atomen substituiert sein kann; $-COOCH_2\text{-}C_6H_5$; $-COO(CH_2)_2O(CH_2)_2OCH_3$;
$X^7$, $X^8$, $X^9$, $X^{13}$: -H, Methyl;
$X^{10}$: -H; Methyl; Methoxy;
$X^{11}$: -H; Methyl; Methoxy; -Cl; -OH, oder
$X^{10}$ und $X^{11}$ zusammen 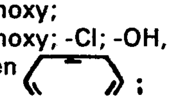 ;
$X^{12}$: -H; Methyl; Methoxy; $-NO_2$; -OH, 2-Hydroxyethoxy; Acetylamino;
$X^{14}$: -H; Methyl; Methoxy; $-NO_2$; $-COOCH_3$; $-SO_2N(C_1\text{-}C_2Alkyl)\text{-}(C_1\text{-}C_2Alkyl)$;
$X^{15}$: -H; $-NO_2$; -Cl; Phenylazo;
$X^{16}$: -H; $-NO_2$; Phenylazo;
$X^{17}$: -H; Methyl;
$X^{18}$: -H; -Cl; Methyl; Acetylamino;
$X^{19}$: $-NO_2$; Methoxycarbonyl; Dimethylaminosulfonyl;
$X^{20}$: -H; -Cl; -Br; -CN;
$X^{21}$: -H; -Cl; -Br;
$X^{22}$: $-NO_2$;
$X^{23}$: -H; -Cl; -Br;
$X^{24}$: -H; -Cl; Methyl; Methoxy;
$X^{25}$: -CN;
$R^5$: -H; Phenyl; Hydroxyphenyl; 2-(Phenylaminocarbonyl)-ethyl; 1,1-Dioxo-tetrahydro-thiophen-3-yl;
$R^6$: -H; Methyl;
$R^7$: -H; Methyl; Ethyl; Propyl; Butyl; 2-Hydroxyethyl; 2-Cyanoethyl; 2-Chloroethyl; 2-Acetyloxy-ethyl; 2-(Methoxycarbonyl)-ethyl; 2-(Phenoxymethylcarbonyloxy)-ethyl; 2-(Methylcarbonyloxy)-ethyl; 2-(Ethylcarbonyloxy)-ethyl;
$R^8$: -H; Phenyl: 2-Cyanoethyl; 2-Hydroxyethyl; 2-(Ethylcarbonloxy)-ethyl; 2-(Methoxycarbonyl)-ethyl;
$R^{11}$: 2-(Phenoxy)-ethyl, 2-(4-cyclohexyl-phenoxy)-ethyl; 2-(3, 4-Dichlorophenylaminocarbonyloxy)-ethyl; 2-(Phenylaminocarbonyloxy)-ethyl; 2-Chloro-ethyl;
$Z^3$: Methyl; $-CONH_2$;
$Z^4$: -OH; $-NH_2$;
$Z^5$: -H; Br.

Falls in einem Farbstoff oder zwei oder mehreren verschiedenen Farbstoffen gleiche R-, Z - oder X-Substituenten vorkommen, bedeutet dies nicht zwangsläufig, daß diese Substituenten identische Bedeutung besitzen. In der Regel ist dies nicht der Fall.

Bei den bevorzugten Farbstoffen der Formeln I bis IX besitzen mehrere, insbesondere alle, Reste die angegebenen bevorzugten Bedeutungen. Bei den besonders bevorzugten Farbstoffen besitzen mehrere, insbesondere alle, Reste die angegebenen besonders bevorzugten Bedeutungen, und bei den ganz besonders bevorzugten Farbstoffen besitzen mehrere, insbesondere alle, Reste die angegebenen ganz besonders bevorzugten Bedeutungen.

Die Farbstoffe der allgemeinen Formeln I bis IX sind bekannt bzw. können leicht nach Verfahren hergestellt werden, die für die Herstellung der Farbstoffe dieser Klassen bekannt sind.

In den nachfolgenden Tabellen 1 bis 9 sind Beispiele für bevorzugte Farbstoffe der Formeln I bis IX angegeben. Dabei sind Alkylreste ohne nähere Angabe geradkettige Alkylreste. Iso-alkylreste sind durch den Zusatz "i" gekennzeichnet. In den Formeln der Farbstoffe I, III, VII und IX ist die Bezifferung der Substituenten entsprechend den folgenden Bezeichnungen vorgenommen worden:

Farbstoff I: 5-((4-Phenylazo)-phenylazo)-6-hydroxy-pyridon (2).
Farbstoff III: 4-((4-Phenylazo)-phenylazo)-phenol.
Farbstoff VII: 4-Phenylazo-$R^5$,$R^6$ substituiertes-anilin.
Farbstoff IX: 4-(2-Cyano-vinyl)-$R^{10}$, $R^{11}$ substituiertesanilin.

**Tabelle 1**

Beispiele für bevorzugte Farbstoffe der Formel I:

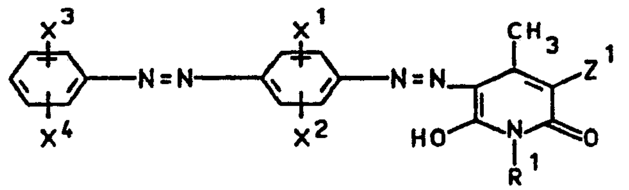

(I)

für $Z^1$ = -CN

| $R^1$ | $X^1$ | $X^2$ | $X^3$ | $X^4$ |
|---|---|---|---|---|
| H | H | H | H | H |
| H | H | H | 4-$CH_3$ | H |
| H | H | 2-$NO_2$ | H | H |
| H | 2-$CH_3$ | 5-$CH_3$ | H | H |
| H | H | H | 3-Cl | H |
| $CH_3$ | H | H | H | H |
| $CH_3$ | 2-$CH_3$ | H | 2-$CH_3$ | H |
| $CH_3$ | H | H | 4-Cl | H |
| $CH_3$ | 2-$CH_3$ | H | 3-Cl | H |
| $CH_3$ | 2-$OCH_3$ | H | H | H |
| $CH_3$ | 2-$CH_3$ | H | H | H |
| $C_2H_5$ | H | H | H | H |
| $C_2H_5$ | H | 2-$NO_2$ | H | H |
| $C_2H_5$ | 2-$OCH_3$ | H | 4-Cl | H |
| $C_2H_5$ | 3-$CH_3$ | H | H | H |
| $C_3H_7$ | 2-Cl | H | 3-$CH_3$ | H |
| $C_3H_7$ | 3-$OCH_3$ | H | H | H |
| $C_4H_9$ | H | H | H | H |
| $C_4H_9$ | H | H | H | $COOC_2H_5$ |
| $C_4H_9$ | 2-$CH_3$ | H | 4-Cl | H |
| $C_4H_9$ | H | H | 2-Cl | H |
| i-$C_4H_9$ | 2-$CH_3$ | 5-$CH_3$ | 4-$CH_3$ | H |
| $CH_2CH(C_2H_5)C_4H_9$ | H | H | 4-$OCH_3$ | H |
| $CH_2CH(C_2H_5)C_4H_9$ | H | H | H | H |
| $CH_2CH(C_2H_5)C_4H_9$ | 2-Cl | H | H | H |
| $(CH_2)_3OCH_3$ | H | H | H | H |
| $(CH_2)_3OCH_3$ | H | 2-$NO_2$ | H | H |
| $(CH_2)_3OCH_3$ | 3-$CH_3$ | H | 3-Cl | H |
| $(CH_2)_3OCH_3$ | 2-$OCH_3$ | H | H | H |
| $(CH_2)_3OCH_3$ | H | H | 4-F | H |
| $(CH_2)_3OCH_3$ | 2-$CH_3$ | 5-$CH_3$ | H | H |
| $(CH_2)_3OCH_3$ | 2-Cl | H | 3-Cl | H |
| $(CH_2)_3OCH_3$ | H | H | 4-$CH_3$ | H |
| $(CH_2)_3OCH_3$ | H | H | 4-$OC_2H_5$ | H |
| $(CH_2)_3OC_2H_5$ | H | H | H | H |
| $(CH_2)_3OC_2H_5$ | 3-$CH_3$ | H | H | H |
| $(CH_2)_3OC_2H_5$ | 2-$CH_3$ | 5-Cl | H | H |
| $(CH_2)_3OC_2H_5$ | 2-$OCH_3$ | H | H | H |
| $(CH_2)_3OC_2H_5$ | 3-$CH_3$ | H | 4-Cl | H |
| $(CH_2)_3OC_2H_5$ | H | H | 3-$CH_3$ | 5-$CH_3$ |
| $(CH_2)_3OC_3H_7$ | H | H | H | H |
| $(CH_2)_3OC_3H_7$ | 2-Cl | H | H | H |
| $(CH_2)_3OC_3H_7$ | 2-$CH_3$ | 5-$CH_3$ | 4-Cl | H |
| $(CH_2)_3O$-i-$C_3H_7$ | H | H | H | H |
| $(CH_2)_3O$-i-$C_3H_7$ | 2-$OCH_3$ | H | 4-Cl | H |
| $(CH_2)_3O$-i-$C_3H_7$ | 3-$CH_3$ | H | H | H |
| $(CH_2)_3O$-i-$C_3H_7$ | 3-$CH_3$ | H | 3-$CH_3$ | H |
| $(CH_2)_3O$-i-$C_3H_7$ | H | H | H | 4-$COO(CH_2)_2OC_2H_5$ |

| $R^1$ | $X^1$ | $X^2$ | $X^3$ | $X^4$ |
|---|---|---|---|---|
| $(CH_2)_3O\text{-}i\text{-}C_3H_7$ | H | H | 3-Cl | H |
| $(CH_2)_3OC_4H_9$ | H | H | H | H |
| $(CH_2)_3OC_4H_9$ | 3-Cl | H | H | H |
| $(CH_2)_3OC_4H_9$ | $2\text{-}CH_3$ | H | 4-Br | H |
| $(CH_2)_3OC_4H_9$ | $2\text{-}CH_3$ | H | $2\text{-}CH_3$ | H |
| $(CH_2)_2OH$ | H | H | H | H |
| $(CH_2)_2OCO\text{-}CH_3$ | $3\text{-}CH_3$ | H | H | H |
| $(CH_2)_4OCO\text{-}C_2H_5$ | $2\text{-}CH_3$ | H | 2-Br | H |
| $(CH_2)_2OCH_3$ | H | H | 2-Cl | 4-Cl |
| $CH_2COOCH_3$ | $2\text{-}CH_3$ | H | H | H |
| $CH_2COOC_2H_5$ | H | H | H | H |
| $CH_2COOC_2H_5$ | $3\text{-}CH_3$ | H | H | H |
| $(CH_2)_3OCH_3$ | $2\text{-}CH_3$ | H | H | $3\text{-}NO_2$ |

**Tabelle 2**

Beispiele für bevorzugte Farbstoffe der Formel II:

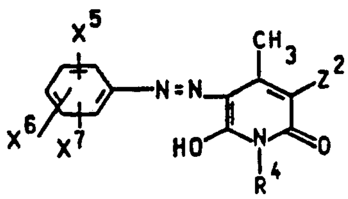

(II)

für $Z^2$ = -CN

| $R^4$ | $X^5$ | $X^6$ | $X^7$ |
|---|---|---|---|
| H | H | $4\text{-}NO_2$ | $2\text{-}CH_3$ |
| H | H | $4\text{-}CO\text{-}C_6H_4\text{-}4'\text{-}i\text{-}C_3H_7$ | H |
| H | H | $3\text{-}OSO_2\text{-}N(CH_3)_2$ | H |
| H | H | H | H |
| H | H | $4\text{-}CH_3$ | H |
| H | $4\text{-}OCH_3$ | $2\text{-}NO_2$ | H |
| H | $4\text{-}CH_3$ | $2\text{-}NO_2$ | H |
| H | H | $4\text{-}SO_2NH_2$ | H |
| H | 5-Cl | 2-Cl | H |
| $CH_3$ | H | $3\text{-}OSO_2\text{-}C_6H_5$ | H |
| $CH_3$ | H | $4\text{-}CONHCH_2CH(C_2H_5)C_4H_9$ | H |
| $CH_3$ | 4-Cl | 3-Cl | H |
| $C_2H_5$ | H | $4\text{-}COOCH_2CH(C_2H_5)C_4H_9$ | H |
| $C_2H_5$ | H | $4COO(CH_2)_2O(CH_2)_2OCH_3$ | H |
| $C_2H_5$ | 4-Cl | $2\text{-}NO_2$ | H |
| $C_2H_5$ | H | $3\text{-}NO_2$ | H |
| $C_3H_7$ | 4-Cl | $2\text{-}NO_2$ | H |
| $C_4H_9$ | 4-Cl | $2\text{-}NO_2$ | H |
| $C_4H_9$ | H | $4\text{-}COOCH_2C_6H_5$ | H |
| $C_4H_9$ | H | $4\text{-}SO_2NHCH_2CH(C_2H_5)C_4H_9$ | H |
| $C_4H_9$ | H | $4\text{-}COOCH_2$ 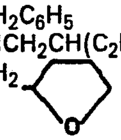 | H |

| $R^4$ | $X^5$ | $X^6$ | $X^7$ |
|---|---|---|---|
| $4\text{-}CH_2CH(C_2H_5)C_4H_9$ | H | $2\text{-}NO_2$ | H |
| $4\text{-}CH_2CH(C_2H_5)C_4H_9$ | $4\text{-}OCH_3$ | $2\text{-}NO_2$ | H |
| $CH_2COOC_2H_5$ | H | $4\text{-}COO(CH_2)_2OCH_2CH=CH_2$ | H |
| $-NHC_6H_5$ | H | 3-Cl | H |
| $-NCH_6H_5$ | 4-Cl | 3-Cl | H |
| $(CH_2)_3OCH_3$ | H | $4\text{-}SO_2OC_6H_5$ | H |
| $(CH_2)_3OCH_3$ | H | $3\text{-}OCO\text{-}CH_2C_6H_5$ | H |
| $(CH_2)_3OCH_3$ | H | $3\text{-}OCOOCH_2C_6H_5$ | H |

**Tabelle 3**

Beispiele für bevorzugte Farbstoffe der Formel III:

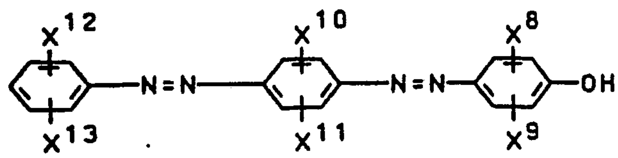

(III)

| $X^8$ | $X^9$ | $X^{10}$ | $X^{11}$ | $X^{12}$ | $X^{13}$ |
|---|---|---|---|---|---|
| H | H | H | H | H | H |
| $2\text{-}CH_3$ | H | H | H | H | H |
| H | H | $2\text{-}CH_3$ | H | $2\text{-}CH_3$ | H |
| H | H | $2\text{-}OCH_3$ | H | $2\text{-}OCH_3$ | H |
| H | H | 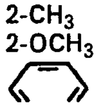 | | H | H |
| H | H | $2\text{-}OCH_3$ | $5\text{-}OCH_3$ | H | H |
| H | H | $2\text{-}OCH_3$ | $5\text{-}CH_3$ | H | H |
| $2\text{-}CH_3$ | H | $2\text{-}CH_3$ | $5\text{-}CH_3$ | $4\text{-}NO_2$ | H |
| H | H | $2\text{-}OCH_3$ | H | $4\text{-}NO_2$ | H |
| H | H | $2\text{-}OCH_3$ | $5\text{-}CH_3$ | $4\text{-}NO_2$ | H |
| H | H | $2\text{-}OCH_3$ | $5\text{-}OCH_3$ | $4\text{-}NO_2$ | H |
| H | H | H | H | 4-OH | H |
| $2\text{-}CH_3$ | H | H | 3-Cl | 4-OH | $3\text{-}CH_3$ |
| $2\text{-}CH_3$ | H | H | H | 4-OH | $3\text{-}CH_3$ |
| H | H | $2\text{-}OCH_3$ | 5-OH | $4\text{-}O(CH_2)_2OH$ | H |
| H | H | $3\text{-}CH_3$ | H | $4\text{-}NHCOCH_3$ | H |

**Tabelle 4**

Beispiele für bevorzugte Farbstoffe der Formel IV:

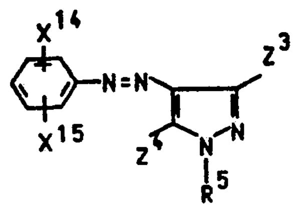

(IV)

| $Z^3$ | $Z^4$ | $R^5$ | $X^{14}$ | $X^{15}$ |
|---|---|---|---|---|
| $CH_3$ | OH | $C_6H_5$ | 4-$COOCH_3$ | H |
| $CH_3$ | OH | $C_6H_5$ | 4-$CH_3$ | 2-$NO_2$ |
| $CH_3$ | OH | 3-OH-$C_6H_4$ | H | 4-$C_6H_5$-N=N- |
| $CH_3$ | OH | H | 5-$OCH_3$ | 2-$NO_2$ |
| $CH_3$ | OH | $(CH_2)_2OCONHC_6H_5$ | 4-$NO_2$ | 2-Cl |
| $CH_3$ | OH | 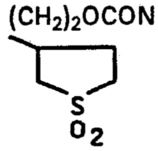 | 4-$NO_2$ | 2-Cl |
| $CH_3$ | $NH_2$ | $C_6H_5$ | 4-$SO_2N(C_2H_5)CH_3$ | 2-$NO_2$ |
| $CH_3$ | $NH_2$ | $C_6H_5$ | 4-$NO_2$ | 2-$NO_2$ |
| $CH_3$ | $NH_2$ | H | 4-$CH_3$ | 2-$NO_2$ |
| $CONH_2$ | OH | $C_6H_5$ | H | 4-$C_6H_5$-N=N- |

**Tabelle 5**

Beispiele für bevorzugte Farbstoffe der Formel V:

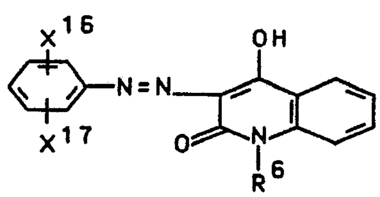

(V)

| $R^6$ | $X^{16}$ | $X^{17}$ |
|---|---|---|
| H | 3-$NO_2$ | H |
| H | 4-$C_6H_5$-N=N | H |
| $CH_3$ | 3-$NO_2$ | H |

**Tabelle 6**

Beispiele für bevorzugte Farbstoffe der Formel VI:

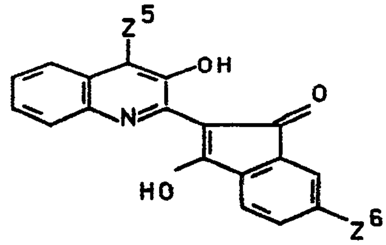

(VI)

| $Z^5$ | $Z^6$ |
|---|---|
| H | H |
| Br | H |
| H | $CON(CH_3)_2$ |

**Tabelle 7**

Beispiele für bevorzugte Farbstoffe der Formel VII:

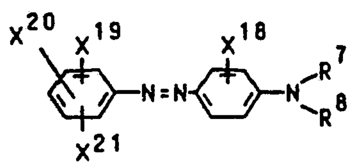

(VII)

| $X^{18}$ | $X^{19}$ | $X^{20}$ | $X^{21}$ | $R^7$ | $R^8$ |
|---|---|---|---|---|---|
| H | $4\text{-}NO_2$ | H | H | H | H |
| H | $4\text{-}NO_2$ | H | H | H | $C_6H_5$ |
| H | $4\text{-}NO_2$ | H | H | $CH_3$ | $(CH_2)_2CN$ |
| H | $4\text{-}NO_2$ | H | H | $C_2H_5$ | $(CH_2)_2CN$ |
| H | $4\text{-}NO_2$ | H | H | $C_4H_9$ | $(CH_2)_2CN$ |
| H | $4\text{-}NO_2$ | H | H | $(CH_2)_2OH$ | $(CH_2)_2CN$ |
| H | $4\text{-}NO_2$ | H | H | $(CH_2)_2OCO\text{-}CH_3$ | $(CH_2)_2CN$ |
| H | $4\text{-}NO_2$ | H | H | $(CH_2)_2OCO\text{-}CH_2OC_6H_5$ | $(CH_2)_2CN$ |
| H | $4\text{-}NO_2$ | 2-Cl | H | $(CH_2)_2CN$ | $(CH_2)_2CN$ |
| $3\text{-}NHCOCH_3$ | $4\text{-}COOCH_3$ | H | H | $(CH_2)_2OCO\text{-}C_2H_5$ | $(CH_2)_2OCO\text{-}C_2H_5$ |
| $3\text{-}CH_3$ | $4\text{-}NO_2$ | 2-Cl | H | $(CH_2)_2CN$ | $(CH_2)_2CN$ |
| 2-Cl | $4\text{-}NO_2$ | 2-CN | H | H | $(CH_2)_2CN$ |
| H | $4\text{-}NO_2$ | 2-Cl | 6-Cl | $C_2H_5$ | $(CH_2)_2CN$ |
| H | $4\text{-}NO_2$ | 2-Cl | 6-Cl | $CH_3$ | $(CH_2)_2OH$ |
| H | $4\text{-}NO_2$ | 2-Cl | 6-Cl | $(CH_2)_2OH$ | $(CH_2)_2OH$ |
| H | $4\text{-}NO_2$ | 2-Cl | 6-Cl | $(CH_2)_2OCO\text{-}CH_3$ | $(CH_2)_2CN$ |
| H | $4\text{-}NO_2$ | 2-Cl | 6-Cl | $(CH_2)_2Cl$ | $(CH_2)_2CN$ |
| H | $4\text{-}NO_4$ | 2-Br | 6-Br | $C_2H_5$ | $(CH_2)_2CN$ |
| 3-Cl | $4\text{-}NO_2$ | 2-Br | 6-Br | $(CH_2)_2OH$ | $(CH_{22}OH$ |
| 3-Cl | $4\text{-}NO_2$ | 2-Br | 6-Cl | $(CH_2)_2OH$ | $(CH_2)_2OH$ |
| H | $4\text{-}NO_2$ | 2-Br | 6-Cl | $(CH_2)_2COOCH_3$ | $(CH_2)_2COOCH_3$ |
| H | $4\text{-}SO_2N(CH_3)_2$ | 2-Cl | 5-Cl | $C_2H_5$ | $(CH_2)_2CN$ |

**Tabelle 8**

Beispiele für bevorzugte Farbstoffe der Formel VIII:

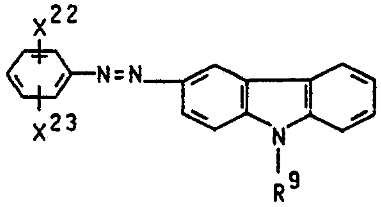

(VIII)

| $X^{22}$ | $X^{23}$ | $R^9$ |
|---|---|---|
| 4-$NO_2$ | 2-Cl | H |
| 4-$NO_2$ | 2-Br | $C_2H_5$ |
| 4-$NO_2$ | 2-Cl | $CH_3$ |
| 4-$NO_2$ | 2-Br | $C_4H_9$ |

**Tabelle 9**

Beispiele für bevorzugte Farbstoffe der Formel IX:

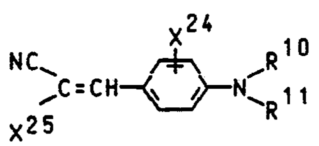

(IX)

| $X^{24}$ | $X^{25}$ | $R^{10}$ | $R^{11}$ |
|---|---|---|---|
| 2-$CH_3$ | CN | $C_2H_5$ | $(CH_2)_2OC_6H_4$-4-cyclohexyl |
| 2-$CH_3$ | CN | $C_4H_9$ | $(CH_2)_2OCONH(3.4\text{-di-Cl-}C_6H_3)$ |
| 3-$CH_3$ | CN | $C_2H_5$ | $(CH_2)_2OCONHC_6H_5$ |
| H | $COOC_2H_5$ | $C_4H_9$ | $(CH_2)_2Cl$ |
| 3-$CH_3$ | CN | $C_2H_5$- | $(CH_2)_2$-S-benzthiazolyl(2) |

In den erfindungsgemäßen Farbstoffmischungen besteht die Komponente A aus einem Farbstoff der Formel I und die Komponente B aus einem oder mehreren anderen Farbstoffen aus der Reihe der gelben, goldgelben oder gelbbraunen Dispersionsfarbstoffe aus der Reihe der Monoazo-, Disazo- oder Methin-Farbstoffe, insbesondere aus einem oder mehreren anderen Farbstoffen der Formel I und/oder einem oder mehreren Farbstoffen der Formeln II bis IX.

Bevorzugt sind solche erfindungsgemäßen Farbstoffmischungen, deren Komponente B einen Farbstoff der Formeln I, II, III, IV, V oder VI enthält oder aus einem solchen Farbstoff besteht.

Besonders bevorzugt sind solche erfindungsgemäßen Farbstoffmischungen, deren Komponente B einen oder mehrere Farbstoffe der Formeln I und/oder II enthält, insbesondere dann, wenn die Komponente B aus einem oder mehreren Farbstoffen der Formel I oder II besteht. Ganz besonders bevorzugt sind solche erfindungsgemäßen Farbstoffmischungen, die mindestens zwei bevorzugte Farbstoffe der Formel I oder einen bevorzugten Farbstoff der Formel I und mindestens einen bevorzugten Farbstoff der Formel II enthalten.

Die erfindungsgemäßen Farbstoffmischungen enthalten oder bestehen aus den beiden Farbstoffkomponenten A und B. Die erfindungsgemäßen Farbstoffmischungen können neben den Farbstoffkomponenten A und B auch noch Stellmittel und/oder Hilfsmittel und gegebenenfalls noch andere Farbstoffe enthalten.

Die erfindungsgemäßen Farbstoffmischungen können in Pulver- oder in Teigform vorliegen. Die pulverförmigen Farbstoffzubereitungen besitzen normalerweise einen Farbstoffgehalt von 30 bis 50 Gew.-%.

Der Rest besteht aus Stell- und/oder Hilfsmitteln, wie z. B. Dispergiermittel, Netzmittel, Emulgatoren, Entstaubungsmittel etc. Die in wäßriger Suspension vorliegenden teigförmigen Farbstoffzubereitungen besitzen normalerweise einen Farbstoffgehalt von 20 bis 50 Gew.-%, einen Stell- und/oder Hilfsmittelgehalt von 20 bis 30 Gew.-%, der Rest ist Wasser. Als Hilfsmittel können die teigförmigen Farbstoffzuberietungen neben Dispergiermitteln, Emulgatorn und Netzmittel auch noch Eintrocknungsverzögerer, wie z. B. Glykole oder Glyzerin, und Konservierungsmittel oder Fungizide enthalten.

Die erfindungsgemäßen Farbstoffmischungen können nach verschiedenen Verfahren hergestellt werden, so z. B. durch Mischen von bereits gefinishten Einzelfarbstoffen der Komponenten A und B oder durch Mischen von ungefinishten Einzelfarbstoffen der Komponenten A und B und anschließendem oder während des Mischvorgangs durchgeführttem Finish. Das Mischen von ungefinishten Einzelfarbstoffen der Komponenten A und B wird vorzugsweise unter Zusatz von Dispergiermittlen und gegebenenfalls weiteren Hilfsmitteln durchgeführt. Dieser Mischprozeß erfolgt zweckmäßigerweise im Zusammenhang mit der für den Finish von Dispersionsfarbstoffen durchzuführenden Naßzerkleinerung bei Temperaturen von 0 bis 190°C, zweckmäßigerweise in geeigneten Mühlen, beispielsweise Kolloid-, Kugel-, Perl- oder Sandmühlen oder Dispersionsknetern, kann aber auch insbesondere bei bereits gefinishten Einzelfarbstoffen durch Mischen mit der Hand oder durch Einrühren in Dispergiermittel oder Färbeflotten oder durch Einarbeiten in Druckpasten bewirkt werden.

Bei der Naßzerkleinerung der Farbstoffe werden die Farbstoffe zusammen mit Dispergiermitteln in einem flüssigen Medium, vorzugsweise in Wasser, aufgeschlämmt und die Mischung der Einwirkung von Scherkräften ausgesetzt. Dabei werden die ursprünglich vorhandenen Farbstoff-Teilchen mechanisch so weit zerkleinert, daß eine optimale spezifische Oberfläche erreicht wird und die Sedimentation der Farbstoffe möglichst gering ist. Die Teilchengröße der Farbstoffe liegt im allgemeinen bei etwa 0,1 bis 10 µm.

Die bei der Naßzerkleinerung mitverwendeten Dispergier mittel können nichtionogen oder anionaktiv sein. Nichtionogene Dispergiermittel sind z. B. Umsetzungprodukte von Alkylenoxiden, wie z. B. Ethylen- oder Propylenoxid mit alkylierbaren Verbindungen, wie z. B. Fettalkoholen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkylaryl-polyglykolethersulfate.

Die bei der Naßzerkleinerung erhaltenen Farbstoffdispersionen sollen für die meisten Anwendungsweisen gießbar sein und können auch noch weitere Hilfsmittel enthalten, z. B. solche, die als Oxydationsmittel wirken, wie z. B. Natrium-m-nitrobenzolsulfonat oder fungizide Mittel, wie z. B. Natrium-o-phenyl-phenolat und Natrium-penta-chlorphenolat.

Die so erhaltenen Farbstoffdispersionen können sehr vorteilhaft zum Ansatz von Druckpasten und Färbeflotten verwendet werden. Besondere Vorteile bieten sie z. B. bei den Kontinue-Verfahren, bei denen durch kontinuierliche Farb-stoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten die Farbstoffe, Dispergiermittel und andere Hilfsmittel, wie z. B. Netz-, Oxydations-, Konservierungs- und Entstaubungsmittel.

Ein Herstellungsverfahren für pulverförmige Farbstoffzubereitungen besteht darin, daß den oben beschriebenen flüssigen Farbstoffdispersionen die Flüssigkeit entzogen wird, z. B. durch Vakuumtrocknung, Gefriertrocknung, durch Trocknung auf Walzentrocknern, vorzugsweise aber durch Sprühtrocknung.

Sollen die Farbstoffmischungen für den Textildruck herangezogen werden, so werden die erforderlichen Mengen der Farbstoffeinstellungen zusammen mit Verdickungsmitteln, wie z. B. Alkali-Alginaten oder dergl., und gegebenenfalls weiteren Zusätzen, wie Fixierbeschleunigern, Netzmitteln und Oxydationsmitteln, zu Druckpasten verknetet.

Erfindungsgemäße Farbstoffmischungen, deren Komponente B aus einem Farbstoff der Formeln I oder II besteht, können auch so hergestellt werden, daß bei der Herstellung des Farbstoffs der Formel I oder II durch Diazotierung und anschließende Kupplung gleichzeitig der Farbstoff der Formel I der Komponente A entsteht. D. h., es wird eine gemeinsame Diazotierung zweier Diazokomponenten und eine anschließende Kupplung auf eine oder eine Mischung zweier verschiedener Kupplungskomponenten durchgeführt, oder es wird eine Diazokomponente diazotiert und anschließend auf eine Mischung zweier verschiedener Kupplungskomponenten gekuppelt. Die Diazotierung und Kupplung erfolgen dabei in an sich bekannter Weise und das Gemisch der Farbstoffe kann wie üblich isoliert, getrocknet und auf die bereits erwähnte Art und Weise in eine pulver- oder teigförmige Zubereitung überführt werden.

Die erfindungsgemäßen Farbstoffmischungen können auch mit kleinen Mengen (unter 10 Gewichtsteilen) von Farbstoffen des Rot- oder Blau-Bereichs nuanciert werden.

Die erfindungsgemäßen Farbstoffmischungen sind vorzüglich zum Färben und Bedrucken von hydrophoben synthetischen Fasermaterialien geeignet. Überraschenderweise sind die erfindungsgemäßen Farbstoffmischungen den Einzelfarbstoffen im Hinblick auf färberisches Verhalten und coloristische Echtheiten überlegen. Die erfindungsgemäßen Farbstoffmischungen besitzen ein hervorragendes Egalisiervermögen und ein ausgezeichnetes Ausziehvermögen, und die mit in ihnen hergestellten Färbungen und Drucke besitzen z. B. eine sehr gute Lichtechtheit im Gelb- und Trichromiebereich, eine hohe Sublimierechtheit, Trockenhitzefixier- und plissierechtheit und eine außerordentlich gute Thermomigration. Die mit den erfindungsgemäßen Farbstoffmischungen hergestellten Färbungen und Drucke besitzen ferner eine gute pH-Stabilität zwischen pH 3 bis 8 und eine hohe Unempfindlichkeit gegen reduzierende Substanzen im Färbebad. Außerdem werden bei

den erfindungsgemäßen Farbstoffmischungen auch bei einer Herabsetzung der Färbetemperaturen noch hervorragend farbstarke Färbungen bei ausgezeichneter Baderschöpfung erhalten. Die erfindungsgemäßen Farbstoffmischungen eignen sich auch gut zur Herstellung von Mischnuancen zusammen mit anderen Farbstoffen.

Als hydrophobe synthetische Materialien kommen z. B. in Betracht: Cellulose-2 1/2-Acetat, Cellulosetriacetat, Polyamide und besonders hochmolekulare Polyester und deren Mischungen mit natürlichen Faserstoffen, wie z. B. Baumwolle, regenerierte Cellulosefasern oder Wolle.

Als hochmolekulare Polyesterfasern kommen insbesondere solche auf der Basis von Polyethylenterephthalat, Polybutylenterephthalat, Polycylohexylenterephthalat oder Polyhydroxypropylenterephthalat in Betracht, sowie modifizierte Polyesterfasern, wie sie z. B. durch Copolymerisation mit Polyethylenglykol, Glyzerin, Isophthalsäure oder Phosphorverbindungen erhalten werden.

In Mischungen hydrophober Faserstoffe mit Wolle, Regeneratcellulose oder Baumwolle kann der Anteil des hydrophoben Materials, insbesondere des Polyesters, 10 bis 90 Gew.-%, insbesondere 30 bis 70 Gew.-%, betragen.

Zur Herstellung der Färbeflotten werden die erforderlichen Mengen der Farbstoffeinstellungen mit dem Färbemedium, vorzugsweise mit Wasser, so weit verdünnt, daß sich für die Fäbrbung ein Flottenverhältnis von 1 : 5 bis 1 : 50 ergibt. Zusätzlich werden den Flotten im allgemeinem weitere Färbereihilfsmittel, wie Dispergier-, Netz- und Fixierhilfsmittel, zugesetzt.

Vorzugsweise werden die erfindungsgemäßenm Farbstoffmischungen zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Cellulose-triacetat eingesetzt. Diese Materialien können z. B. in Form von flächen-, flockenoder fadenförmigen Gebilden vorliegen und z. B. zu Garnen oder gewebten oder gestrickten Textilstoffen verarbeitet sein. Das Färben des genannten Fasergutes mit den erfindungsgemäßen Farbstoffmischungen erfolgt in an sich bekannter Weise, vorzugsweise aus wäßriger Suspension, gegebenenfalls in Gegenwart von Carriern, zwischen 80 bis ca. 125°C nach dem Ausziehverfahren, oder in Abwesenheit von Carriern nach dem HT-Verfahren im Färbeautoklav bei etwa 110 bis 140°C, sowie nach dem sogenannten Thermosolverfahren, wobei die Ware mit der Färbeflotte geklotzt und anschließend bei etwa 175 bis 230°C fixiert wird. Das Bedrucken der genannten Materialien kann so durchgeführt werden, daß die mit erfindungsgemäßen Farbstoffmischungen enthaltenden Druckpasten bedruckte Ware zur Fixierung des Farbstoffs, gegebenenfalls in Gegenwart eines Carriers, bei Temperaturen zwischen ca. 110 bis 230°C mit HT-Dampf, Druckdampf oder Trockenhitze behandelt wird.

An die eigentliche Färbung kann sich vorteilhaft eine reduktive oder eine durch Dispergiermittel unterstützte Nachbehandlung zur Entfernung nicht restlos fixierter Farbstoffanteile anschließen.

Bei Einsatz von Mischungen aus Polyesterfasern mit Wolle, Baumwolle oder Regeneratzellulose kann die zugemischte Faser vor oder nach der Polyesterfärbung mit geeigneten Farbstoffen im gleichen oder abweichenden Farbton (Melangen, Webmuster) gefärbt werden.

Die erfindungsgemäßen Farbstoffmischungen können auch vorteilhafterweise zusammen mit anderen Farbstoffen, wie z. B. auch Rot- oder Blaufarbstoffen, eingesetzt werden. Die anderen Farbstoffe können dabei bereits in der Zubereitung der erfindungsgemäßen Farbstoffmischung enthalten sein, oder sie können erst bei der Durchführung der Färbung im Sinne einer Kombination mitverwendet werden.

Die Verwendung der erfindungsgemäßen Farbstoffmischungen zum Färben nach dem HT- oder Thermosol-Verfahren ist bevorzugt.

Falls nichs anderes vermerkt ist, bedeuten in den nachfolgend aufgeführten Beispielen Teile Gewichtsteile und Prozente Gewichtsprozente.

**Beispiel 1:**

a) 50 Teile des Farbstoffs der Formel X

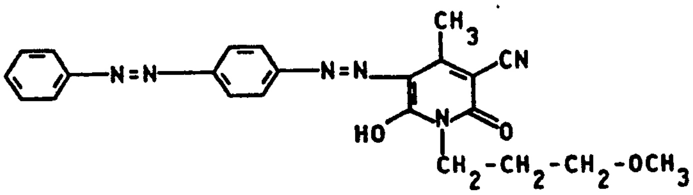

(X)

(hergestellt gemäß DE-A1-1917278) und 50 Teile der Farbstoffs der Formel XI

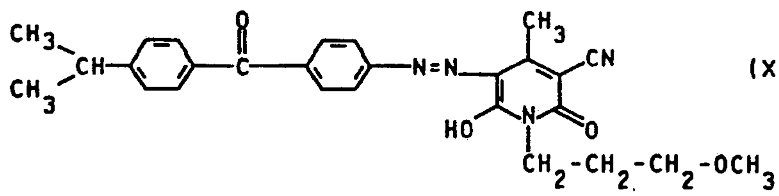

(XI)

(hergestellt gemäß DE-A1-1901711)

werden miteinander gemischt und unter Zusatz der doppelten Menge eines handelsüblichen Dispergiermittels aus der Reihe der Ligninsulfonate in Gegenwart von Wasser in einer Perlmühle fein dispergiert. Die erhaltene Dispersion wird anschließend getrocknet.

b) Unter Verwendung der erhaltenen Farbstoffpräparation werden HT-Färbungen auf Polyester nach folgender Vorschrift hergestellt:

In 2000 g Wasser werden x g Farbstoffpräparation (als Reinfarbstoff gerechnet) eingerührt und mit 4,0 g Ammoniumsulfat und 2,0 g eines handelsüblichen Dispergiermittels auf der Basis eines Naphthalinsulfonsäure-Formaldehyd-Kondensats versetzt und mit Essigsäure auf einen pH-Wert von 5 eingestellt.

In die so erhaltene Färbeflotte bringt man 100 g eines Polyestergewebes auf der Basis von Polyethylenglykolterephthalat ein und färbt 30 min bei 130° C.

Bei den nachfolgend angegebenen Einsatzmengen (gerechnet als Reinfarbstoff) bezogen auf das Polyestergewicht, erhält man die nachfolgend angegebenen Baderschöpfungen. Zum Vergleich werden die Baderschöpfungen für die Einzelfarbstoffe X und XI in analoger Weise bestimmt. Es werden folgende Ergebnisse erhalten:

| | Einsatzmenge | Färbebaderschöpfung |
|---|---|---|
| Erfindungsgemäße Farbstoffmischung der Farbstoffe X und XI | 0,1 % | 97 % |
| | 0,2 % | 96 % |
| | 0,5 % | 95 % |
| | 1 % | 79 % |
| Farbstoff X | 0,1 % | 97 % |
| | 0,2 % | 77 % |
| | 0,5 % | 43 % |
| Farbstoff XI | 0,1 % | 97 % |
| | 0,2 % | 75 % |
| | 0,5 % | 50 % |

**Beispiel 2:**

a) Man stellt aus 50 Teilen der Farbstoffs des Formel X

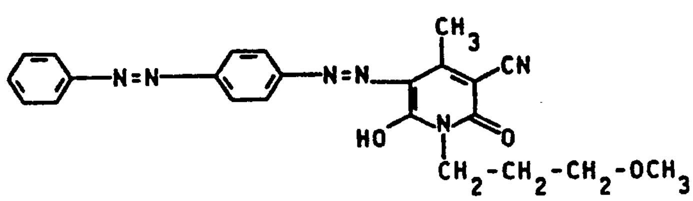

(X)

und 50 Teilen des Farbstoffs C.I. Disperse Yellow 227 der Formel XII

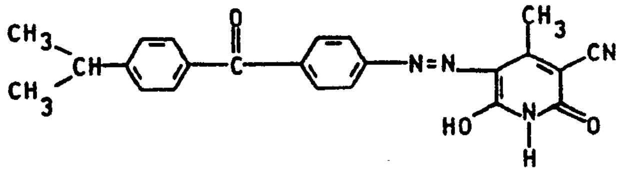

(XII)

sowie 150 Teilen eines Dispergiermittels aus der praxisbekannten Reihe der Ligninsulfonate durch wäßriges Vermahlen in einer Perlmühle eine feine Farbstoffdispersion her und trocknet diese anschließend durch Sprühtrocknung.

b) Für die nachfolgende Färbung verwendet man 100 Teile einer Polyesterfaser (Polyethylenterephthalat-Typ) und gibt diese als Garn in einen Färbebecher, der 2000 Teile Wasser von 60°C, 2 Teile kristalliertes Natriumacetat, 3 Teile 30 %-ige Essigsäure und 1 Teil der oben beschriebenen Farbstoffpräparation enthält. Man erwärmt innerhalb von 30 min auf 128-130°C und färbt 30 min bei dieser Temperatur. Anschließend wird abgekühlt, gespült und getrocknet. Man erhält eine klare, goldgelbe Färbung mit hoher Lichtechtheit und mit kaum merklichem Restfarbstoffgehalt im verbleibenden Färbebad.

Die Verwendung eines andersartigen, praxisüblichen Dispergiermittels bei der Herstellung des Farbstoffpräparats führt zu dem gleichen Färberesultat.

**Beispiel 3:**

Man stellt wie im Beispiel 2 beschrieben unter Verwendung der folgenden Mengenverhältnisse der Farbstoffe Färbepräparate her:

| | Farbstoff XII | Farbstoff X |
|---|---|---|
| a) | 90 Teile | 10 Teile |
| b) | 20 Teile | 80 Teile. |

Bei anschließender Ausfärbung auf Polyesterfasermaterial erhält man gleichwertige Färberesultate wie im Beispiel 2.

**Beispiel 4:**

Man verwendet 100 Teile einer Polyesterfaser (Polyethylenterephthalat-Typ, modifiziert mit Polybutylenterephthalat-Anteilen) und verfährt ansonsten wie im Beispiel 2 beschrieben. Hierbei erhält man ebenfalls eine sehr gute Färbebaderschöpfung und eine hohe Farbtiefe auf dem Polyestermaterial.

Zu einem gleich guten Resultat gelangt man, wenn man eine Polyesterfaser (Polyethylenterephthalat-Typ, modifiziert mit Polyethylenglykol-Anteilen) verwendet.

**Beispiel 5:**

Man stellt aus 50 Teilen eines Farbstoffs der nachfolgenden Formel XII und 50 Teilen eines Farbstoffs der nachfolgenden Formel XIII, welche durch gemeinsame Kupplung hergestellt wurden,

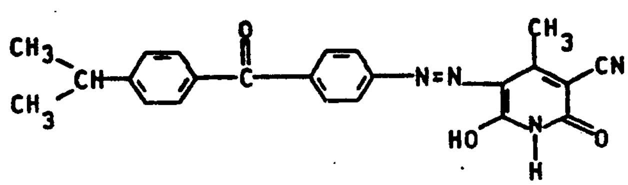

(XII)

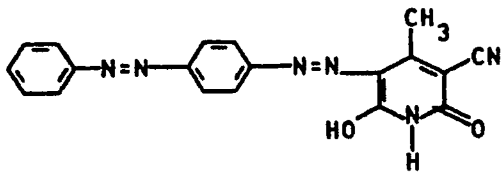

(XIII)

sowie 180 Teilen eines Dispergiermittels aus der praxisbekannten Reihe der Formaldehyd-Naphthalinsulfonsäure-Kondensationsprodukte durch Mahlung in einer Perlmühle in Gegenwart von Wasser eine feinverteilte Farbstoffpräparation her und trocknet diese.

Man verwendet 2 Teile dieser Präparation zur Färbung von 150 Teilen einer auf Polycyclohexylenterephthalat basierenden Polyesterfaser bei 130°C. Hierbei erhält man eine tiefe Goldgelbfärbung ohne merkliche Mengen von im Färbebad zurückbleibendem Farbstoff.

**Beispiel 6:**

Setzt man anstelle des im Beispiel 5 verwendeten Polyestermaterials eine Mischung aus 120 Teilen Polyester auf Basis Polyethylenterephthalat und 30 Teilen Baumwolle ein und färbt wie im Beispiel 5 angegeben, so erhält man eine tiefe gelbangefärbte Polyesterfaser neben einem gut reservierten Baumwollanteil.

**Beispiel 7:**

a) 80 Teile eines aus den Farbstoffen der Formeln X und XIII

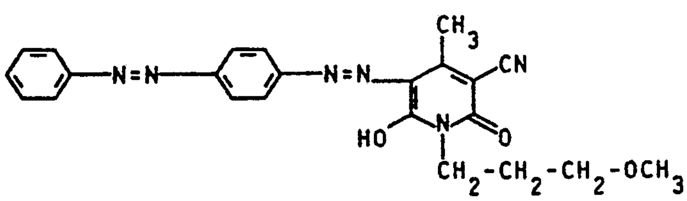

(X)

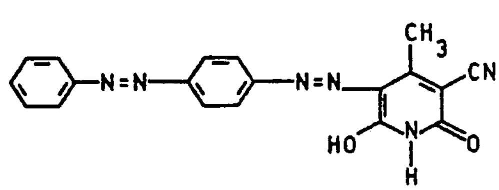

(XIII)

im Gewichtsverhältnis [50 : 50] bestehenden Farbstoffgemisches (hergestellt durch Mischkupplung) werden in Gegenwart von Wasser und unter Mitverwendung eines handelsüblichen Dispergiermittels in einer Perlmühle in eine feinverteilte Dispersion überführt, die anschließend sprühgetrocknet wird.

b) In gleicher Weise wie unter a) beschrieben, werden 20 Teile des Farbstoffs der Formel XIV

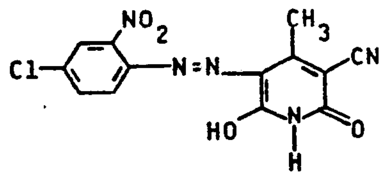

(XIV)

vergl. US-PS 3 487 066, in eine feinverteilte Dispersion überführt und anschließend sprühgetrocknet.

c) Die nach a) und b) erhaltenen Produkte werden sorgfältig miteinander gemischt.

d) Für die Färbung von 10 Teilen Polyesterfasern (Basis Polyethylenglycolterephthalat) in Form eines Garnwickels wird aus 0,1 Teilen der nach c) hergestellten erfindungsgemäßen Farbstoffmischung, 0,05 Teilen des Handelsfarbstoffs C.I. Disperse Blue 79/1 und 0,1 Teilen des Handelsfarbstoffs C.I. Disperse Red 167 in üblicher Weise eine Färbeflotte hergestellt und darin der Garnwickel bei 125 bis 130° C 30 min lang gefärbt.

Man erhält eine tiefe Braunfärbung sowie eine sehr gute Erschöpfung des Färbebades.

e) Wenn die Farbstoffe der Formeln X, XIII und XIV gemeinsam gefinisht werden, erhält man bei analoger Arbeitsweise wie vorstehend beschrieben, ein identisches Ergebnis.

**Beispiel 8:**

Man stellt aus 10 Teilen der im Beispiel 2 beschriebenen Farbstoffpräparation, 10 Teilen 30 %-iger Essigsäure, 5 Teilen eines handelsüblichen Verdickungsmittels und 965 Teilen Wasser eine Klotzflotte her. Ein Gewebe aus einer innigen Mischung aus 50 Teilen Polyesterfaser und 50 Teilen Baumwolle wird mit der oben genannten Flotte geklotzt (Flottenaufnahme 60 %), bei 90-100° C getrocknet und anschließend 30 Sekunden bei 210° C thermosoliert. Nach einer praxisüblichen Nachwäsche erhält man auf dem Polyesteranteil eine Goldgelb-Färbung mit hervorragender Licht-, Thermofixier- und Thermomigrationsechtheit.

Verwendet man eine Klotzflotte, welche bei sonst gleicher Zusammensetzung 30 Teile obiger Farbstoffpräparation enthält, erhält man ebenfalls eine hochechte Färbung.

Verfährt man nach den Angaben des Beispiels 2, ersetzt jedoch die im Beispiel 2 angegebenen Farbstoffe durch die in den folgenden Beispielen 9 bis 32 genannten Farbstoffe, dann erhält man ebenfalls erfindungsgemäße Farbstoffmischungen, die in ihren coloristischen Eigenschaften, insbesondere im Farbaufbau, den entsprechenden Einzelfarbstoffen überlegen sind.

Bei den in der nachfolgenden Tabelle 10 angegebenen Beispielen 9 bis 14 bestehen die beiden Komponenten A und B der erfindungsgemäßen Farbstoffmischungen aus Farbstoffen der Formel I.

**Tabelle 10**

Mischungen von Farbstoffen der Formel I

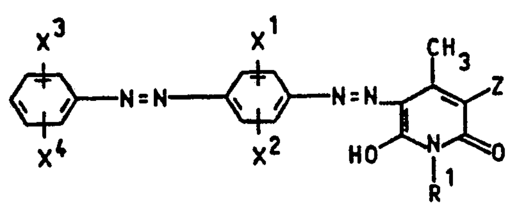

(I)

wobei in allen Fällen $X^2 = X^3 = X^4 = H$ und $Z^1 = CN$ bedeuten.

| Beispiel | Komponente | $R^1$ | $X^1$ | Anteil in % |
|---|---|---|---|---|
| 9 | A | H | H | 40 |
| | B | $CH_3$ | H | 60 |
| 10 | A | $CH_3$ | H | 35 |
| | B | $C_4H_9$ | H | 65 |
| 11 | A | $CH_3$ | H | 20 |
| | B | $(CH_2)_3OCH_3$ | H | 80 |

| Beispiel | Komponente | $R^1$ | $X^1$ | Anteil in % |
|---|---|---|---|---|
| 12 | A | $(CH_2)_3OCH_3$ | H | 50 |
| | B | $(CH_2)_3O\text{-i-}C_3H_7$ | H | 50 |
| 13 | A | $(CH_2)_3OCH_3$ | $2\text{-}CH_3$ | 40 |
| | B | $(CH_2)_3OCH_3$ | H | 60 |
| 14 | A | $(CH_2)_3OCH_3$ | H | 70 |
| | $B^1$ | $(CH_2)_3OCH_3$ | $3\text{-}CH_3$ | 10 |
| | $B^2$ | $(CH_2)_3O\text{-}C_4H_9$ | H | 20 |
| 15 | A | $(CH_2)_3OCH_3$ | H | 35 |
| | B | $(CH_2)_3O\text{-}C_4H_9$ | H | 65 |
| 16 | A | $(CH_2)_3OC_2H_5$ | H | 45 |
| | B | $(CH_2)_3O\text{-}C_4H_9$ | H | 55 |
| 17 | A | $(CH_2)_3CH_3$ | H | $33^1/3$ |
| | $B^1$ | $(CH_2)_3OC_2H_5$ | H | $33^1/3$ |
| | $B^2$ | $(CH_2)_3O\text{-}C_4H_9$ | H | $33^1/3$ |
| 18 | A | $(CH_2)_2O\text{-}C_4H_9$ | H | 50 |
| | B | $(CH_2)_3O\text{-}C_4H_9$ | H | 50 |
| 19 | A | $(CH_2)_3OC_3H_7$ | H | 50 |
| | B | $(CH_2)_3O\text{-i-}C_3H_7$ | H | 50 |
| 20 | A | $(CH_2)_3O\text{-i-}C_3H_7$ | H | 45 |
| | B | $(CH_2)_3OC_4H_9$ | H | 55 |
| 21 | A | $CH_2)_3OC_3H_7$ | H | 55 |
| | B | $(CH_2)_3OC_4H_9$ | H | 45 |
| 22 | A | $(CH_2)_3O\text{-i-}C_3H_7$ | H | 60 |
| | B | $(CH_2)_3O\text{-i-}C_3H_7$ | $2\text{-}NO_2$ | 40 |
| 23 | A | $(CH_2)_3O\text{-i-}C_3H_7$ | $2\text{-}NO_2$ | 50 |
| | B | $(CH_2)_3OC_4H_9$ | $2\text{-}NO_2$ | 50 |
| 24 | A | $(CH_2)_3OC_4H_9$ | H | 70 |
| | B | $(CH_2)_3OC_4H_9$ | $2\text{-}NO_2$ | 30 |
| 25 | A | $(CH_2)_3OC_3H_7$ | $2\text{-}NO_2$ | 45 |
| | B | $(CH_2)_3OC_4H_9$ | $2\text{-}NO_2$ | 55 |
| 26 | A | $(CH_2)_3OCH_3$ | $2\text{-}NO_2$ | 35 |
| | B | $(CH_2)_3OC_4H_9$ | $2\text{-}NO_2$ | 75 |
| 27 | A | $(CH_2)_2OC_2H_5$ | H | 40 |
| | B | $(CH_2)_3OC_4H_9$ | H | 60 |
| 28 | A | $(CH_2)_2O\text{-i-}C_3H_7$ | H | 50 |
| | B | $(CH_2)_2OC_4H_9$ | H | 50 |
| 29 | A | $(CH_2)_2OC_4H_9$ | H | 40 |
| | B | $(CH_2)_3OC_3H_7$ | H | 60 |
| 30 | A | $(CH_2)_3OC_4H_9$ | $2\text{-}CH_3$ | 40 |
| | B | $(CH_2)_3OC_4H_9$ | H | 60 |
| 31 | A | $(CH_2)_3OC_4H_9$ | $3\text{-}CH_3$ | 30 |
| | B | $(CH_2)_3OC_4H_9$ | H | 70 |
| 32 | A | $(CH_2)_3OC_3H_7$ | $3\text{-}CH_3$ | 50 |
| | B | $(CH_2)_3OC_4H_9$ | $3\text{-}CH_3$ | 50 |

**Tabelle 11**

Mischungen von Farbstoffen, bei denen die Komponente A aus Farbstoffen der Formel I

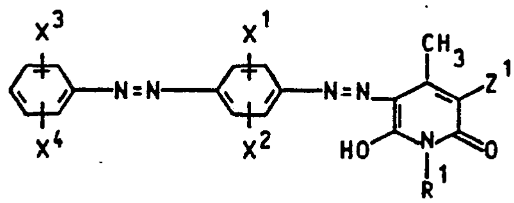

(I)

besteht, wobei, sofern nichts anderes angegeben ist, $Z^1$ = CN und $X^1 = X^2 = X^3 = X^4$ = H bedeuten, und bei denen die Komponente B aus einem oder zwei Farbstoffen der Formel II

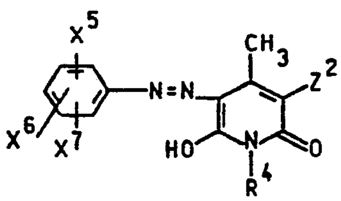

(II)

wobei in allen Fällen $Z^2$ = CN und $X^5$ = H bedeuten, und gegebenenfalls aus einem Farbstoff der Formel I, wobei $Z^1$ = CN und $X^1 = X^3 = X^4$ = H bedeuten, besteht.

| Beispiel | Komponente | Anteil in % | |
|---|---|---|---|
| 33 | A | $R^1 = (CH_2)_3OC_4H_9$ | 50 |
| | B | $R^4 = CH_3$; $X^6$ = 3-O-$SO_2C_6H_5$; $X^7$=H | 50 |
| 34 | A | $R^1 = (CH_2)_3OCH_3$ | 45 |
| | B | $R^4 = C_2H_5$; $X^7$=H | |
| | | $X^6$ = 4-$COO(CH_2)_2O(CH_2)_2OCH_3$ | 45 |
| 35 | A | $R^1 = (CH_2)_3OCH_3$ | 70 |
| | B | $R^4 = C_4H_9$; $X^7$=H | |
| | | $X^6$ = 4-$SO_2NHCH_2CH(C_2H_5)C_4H_9$ | 30 |
| 36 | A | $R^1 = (CH_2)_3OCH_3$ | 60 |
| | $B^1$(II) | $R^4 = CH_3$; $X^6$ = 3-O-$SO_2C_6H_5$ | 20 |
| | $B^2$(II) | $R^4$ = H; $X^7$=H | 20 |
| | | $X^6$ = 4-($COC_6H_4$-4-i-$C_3H_7$) | |
| 37 | A | $R^1 = (CH_2)_3OCH_3$ | 40 |
| | $B^1$(I) | $R^4 = (CH_2)_3O$-i-$C_3H_7$; $X^2$ = 2-$NO_2$ | 40 |
| | $B^2$(II) | $R^4 = C_2H_5$; $X^6$ = 2-$NO_2$; $X^7$ = 4-Cl; | 20 |
| 38 | A | $R^1 = (CH_2)_3O$-i-$C_3H_7$ | 50 |
| | B | $R^4 = C_2H_5$; $X^6$ = 2-$NO_2$; $X_7$ = 4-Cl; | 50 |
| 39 | A | $R^1 = (CH_2)_3OCH_3$ | 55 |
| | B | $R^4 = CH_2COOC_2H_5$; $X^7$=H | |
| | | $X^6$ = 4-$COO(CH_2)_2OCH_2CH{=}CH_2$ | 45 |

| Beispiel | Komponente | Anteil in % | |
|---|---|---|---|
| 40 | A | $R^1 = (CH_2)_3O\text{-}i\text{-}C_3H_7$ | 50 |
| | B | $R^4 = C_4H_9$; $X^7 = H$ | |
| | | $X^6 = 4\text{-}COOCH_2$- 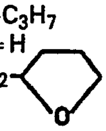 | 50 |
| 41 | A | $R^1 = (CH_2)_3OC_4H_9$; | 50 |
| | B | $R^4 = H$; $X^7 = H$ | 50 |
| | | $X^6 = 4\text{-}(COC_6H_4\text{-}4\text{-}i\text{-}C_3H_7)$ | |
| 42 | A | $R^1 = (CH_2)_3OC_4H_9$; | 60 |
| | B | $R^4 = C_4H_9$; $X^7 = H$ | 40 |
| | | $X^6 = 4\text{-}COOCH_2C_6H_5$ | |
| 43 | A | $R^1 = (CH_2)_3OC_3H_7$; | 55 |
| | B | $R^4 = CH_3$; $X^7 = H$ | 45 |
| | | $X^6 = 4\text{-}CONHCH_2CH(C_2H_5)C_4H_9$ | |
| 44 | A | $R^1 = (CH_2)_3OC_4H_9$; | 70 |
| | B | $R^4 = C_2H_5$; $X^6 = 2\text{-}NO_2$; $X^7 = 4\text{-}Cl$ | 30 |
| 45 | A | $R^1 = (CH_2)_3OC_2H_5$; | 65 |
| | B | $R^4 = CH_3$; $X^6 = 3\text{-}Cl$; $X^7 = 4\text{-}Cl$ | 35 |
| 46 | A | $R^1 = (CH_2)_2OCOC_2H_5$; | 65 |
| | B | $R^4 = C_4H_9$; $X^6 = 2\text{-}NO_2$; $X^7 = 4\text{-}Cl$ | 35 |
| 47 | A | $R^1 = (CH_2)_3OCH_3$; $X^2 = 2\text{-}NO_2$ | 45 |
| | B | $R^4 = H$; $X^6 = 4\text{-}(COC_6H_4\text{-}4\text{-}i\text{-}C_3H_7)$; | 55 |
| | | $X^7 = H$ | |
| 48 | A | $R^1 = (CH_2)_3O\text{-}iC_3H_7$; $X^2 = 2\text{-}NO_2$ | 50 |
| | B | $R^4 = CH_3$; $X^6 = 3\text{-}OSO_2C_6H_5$; $X^7 = H$ | 50 |

Die Angabe $B^1(II)$, $B^2(II)$ bei Beispiel 36 bedeutet, daß die Komponente B aus 2 Farbstoffen der Formel II besteht und die Angabe $B^1(I)$, $B^2(II)$ bei Beispiel 37 bedeutet, daß die Komponente B aus einem Farbstoff der Formel I und einem Farbstoff der Formel II besteht.

**Beispiel 49:**

Eine erfindungsgemäße Farbstoffmischung enthält 60 Teile des Farbstoffs der Formel

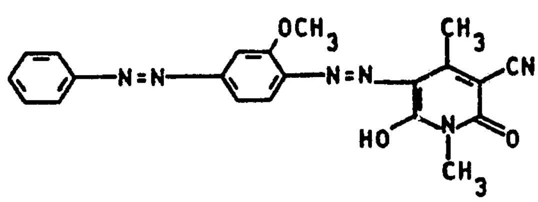

und 40 Teile des Farbstoffs

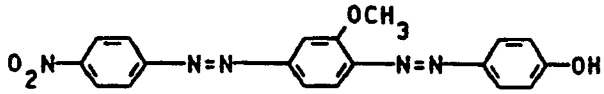

**Beispiel 50:**

Eine erfindungsgemäße Farbstoffmischung enthält 55 Teile des Farbstoffs der Formel

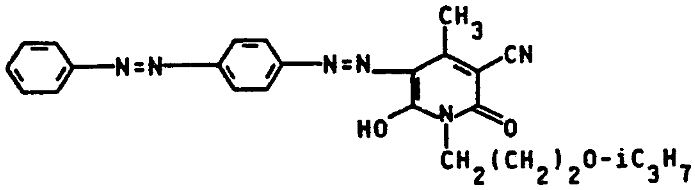

und 45 Teile des Farbstoffs

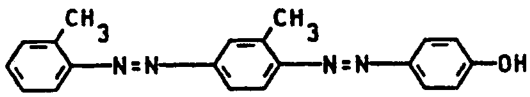

**Beispiel 51:**

Eine erfindungsgemäße Farbstoffmischung enthält 85 Teile des Farbstoffs der Formel

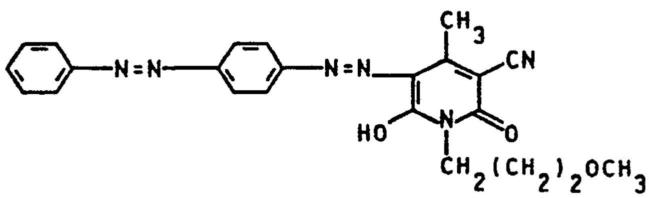

und 15 Teile des Farbstoffs

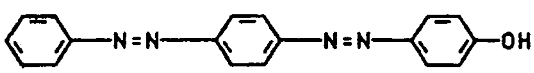

**Beispiel 52:**

Eine erfindungsgemäße Farbstoffmischung enthält 50 Teile des Farbstoffs der Formel

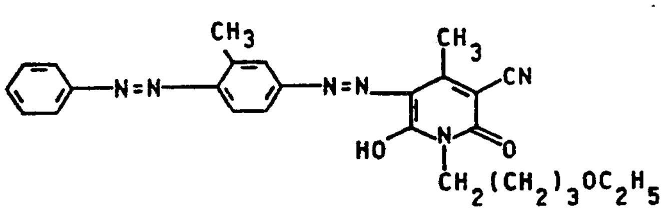

und 50 Teile des Farbstoffs

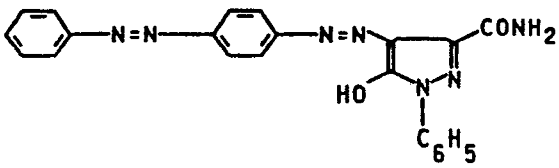

**Beispiel 53:**

Eine erfindungsgemäße Farbstoffmischung enthält 65 Teile des Farbstoffs der Formel

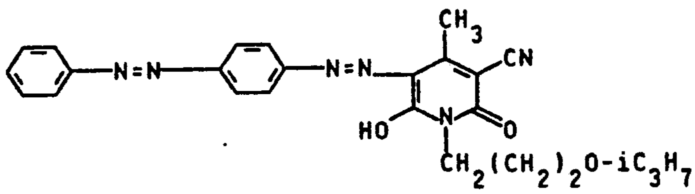

und 35 Teile des Farbstoffs der Formel

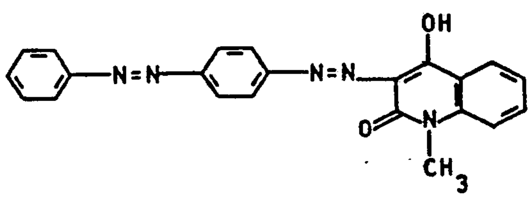

**Beispiel 54:**

Eine erfindungsgemäße Farbstoffmischung enthält 70 Teile des Farbstoffs der Formel

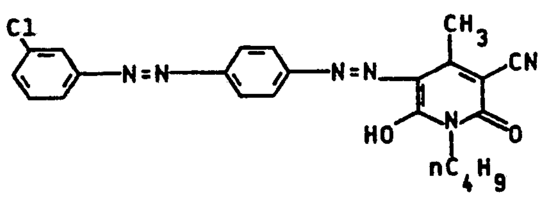

und 30 Teile des Farbstoffs der Formel

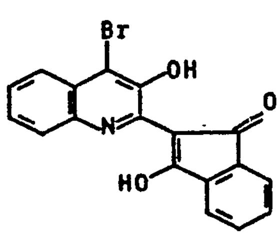

**Beispiel 55:**

Eine erfindungsgemäße Farbstoffmischung enthält 80 Teile des Farbstoffs der Formel

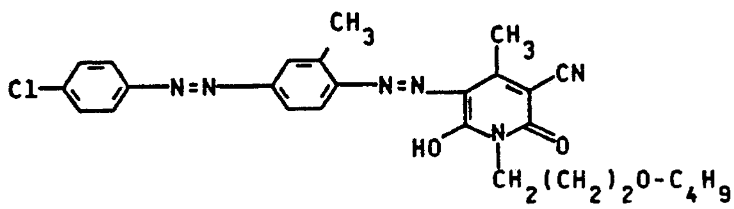

und 20 Teile des Farbstoffs der Formel

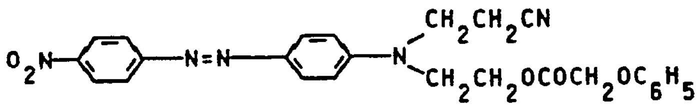

**Beispiel 56:**

Eine erfindungsgemäße Farbstoffmischung enthält 85 Teile des Farbstoffs der Formel

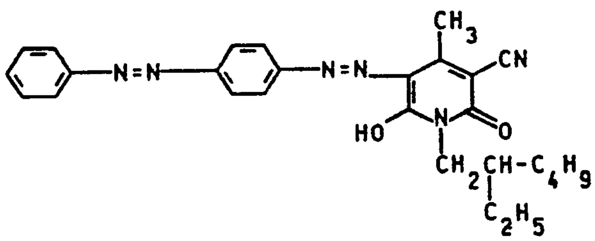

und 15 Teile des Farbstoffs der Formel

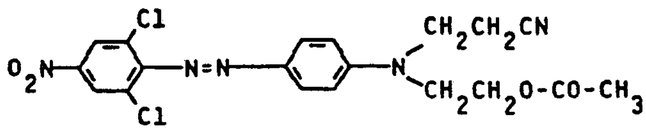

**Beispiel 57:**

Eine erfindungsgemäße Farbstoffmischung enthält 75 Teile des Farbstoffs der Formel

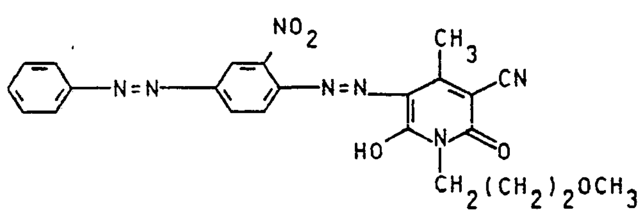

und 25 Teile des Farbstoffs der Formel

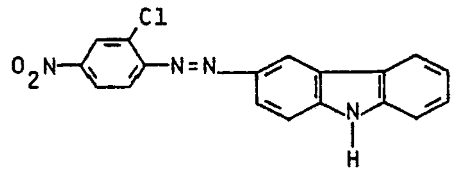

**Beispiel 58:**

Eine erfindungsgemäße Farbstoffmischung enthält 80 Teile des Farbstoffs der Formel

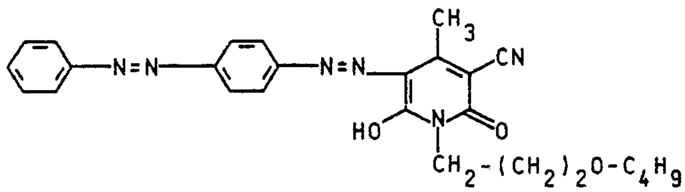

und 20 Teile der Farbstoffs des Formel

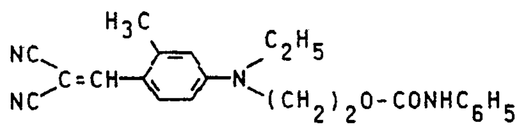

**Beispiel 59:**

Verwendet man im Beispiel 2 anstelle der dort verwendeten Polyesterfaser eine handelsübliche Zellulose-Triacetatfaser, so erhält man ein gleich gutes Färbeergebnis.

**Patentansprüche**

1. Mischung gelber Dispersionsfarbstoffe, dadurch gekennzeichnet, daß sie aus den Farbstoffkomponenten A und B besteht oder diese Farbstoffkomponenten enthält, wobei die Farbstoffkomponente A aus einem Farbstoff der Formel I

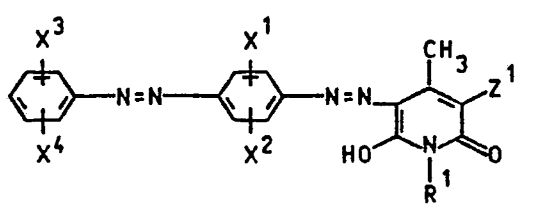

(I)

und die Farbstoffkomponete B aus einem oder mehreren anderen Farbstoffen der Formel I und/oder einem oder mehreren anderen gelben, goldgelben oder gelbbraunen Dispersionsfarbstoffen aus der Reihe der Monoazo-, Disazo- oder Methin-Farbstoffe besteht und
$R^1$: -H; Alkyl mit 1 bis 8 C-Atomen, das mit -Cl, -Br, -CN, Phenyl, $(C_1-C_4)$alkylsubstituiertem Phenyl, mit gegebenenfalls mit -Cl, -Br, Phenyl, -CN, $(C_1-C_4)$Alkoxy, $(C_1-C_4)$ Alkoxy-$(C_2-C_4)$alkoxy, Phenoxy, $(C_3-C_5)$Alkenyloxy, Cyclopentyloxy oder Cyclohexyloxy substituiertem Alkoxycarbonyl mit 1 bis 4 C-Atomen in der Alkoxygruppe substituiert sein kann; Alkyl mit 2 bis 4 C-Atomen, das mit Hydroxy, Alkoxy mit 1 bis 4 C-Atomen, Alkoxy-alkoxy mit insgesamt 2 bis 8 C-Atomen, gegebenenfalls mit $(C_1-C_6)$Alkyl, Cyclopentyl oder Cyclohexyl substituiertem Phenoxy, Alkenyloxy mit 3 bis 5 C-Atomen, Cyclopentyloxy, Cyclohexyloxy, Furfuryloxy,

Tetrahydrofurfuryloxy, mit gegebenenfalls mit -Cl, -Br, -CN, Phenyl, Phenoxy, $(C_1$-$C_4)$Alkoxy substituiertem Alkylcarbonyloxy mit 1 bis 4 C-Atomen in der Alkylgruppe, mit gegebenenfalls mit -Cl, -Br, Methyl einfach oder unabhängig voneinander mehrfach substituiertem Phenylcarbonyloxy, gegebenenfalls mit -Cl, -Br, -CN, Phenyl, Phenoxy, $(C_1$-$C_4)$Alkoxy substituiertem Alkoxycarbonyloxy, mit gegebenenfalls mit -Cl, -Br, Methyl einfach oder unabhängig voneinander mehrfach substituiertem Phenoxycarbonyloxy, mit gegebenenfalls mit Cl, -Br, Methyl einfach oder unabhängig voneinander mehrfach substituiertem Phenylaminocarbonyloxy, gegebenenfalls mit -OH, $(C_1$-$C_4)$Alkoxy oder Phenoxy in den Alkylresten substituiertes mono- oder dialkylsubstituiertes Aminocarbonyloxy mit 1 bis 4 C-Atomen in den Alkylresten substituiert sein kann; Alkenyl mit 3 bis 5 C-Atomen; Cyclopentyl; Cyclohexyl; gegebenenfalls substituiertes Phenyl; Phenylamino; Benzyl; Furfuryl; Tetrahydrofurfuryl; 1,1-Dioxotetrahydro-thieny-(3);

$Z^1$ -CN oder $-CONR^2R^3$;

$X^1$ -H; Alkyl mit 1 bis 4 C-Atomen, das mit Hydroxy oder Alkoxy mit 1 bis 4 C-Atomen substituiert sein kann; Alkoxy mit 1 bis 4 C-Atomen; Alkoxy mit 2 bis 4 C-Atomen, das mit Hydroxy oder Alkoxy mit 1 bis 4 C-Atomen substituiert ist;

-F; -Cl; -Br;

$X^2$ -H; Alkyl mit 1 bis 4 C-Atomen; Alkoxy mit 1 bis 4 C-Atomen; Alkoxy mit 2 bis 4 C-Atomen, das mit Hydroxy oder Alkoxy mit 1 bis 4 C-Atomen substituiert ist; -F; -Cl; -Br; Alkylcarbonylamino mit 1 bis 4 C-Atomen im Alkylrest; -OH; $-NO_2$ oder

$X^1$ und $X^2$ zusammen

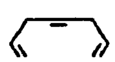.

$X^3$ eine der Bedeutungen von $X^1$;

$X^4$ -H; Alkyl mit 1 bis 4 C-Atomen, das mit Hydroxy oder Alkoxy mit 1 bis 4 C-Atomen substituiert sein kann; Alkoxy mit 1 bis 4 C-Atomen; Alkoxy mit 2 bis 4 C-Atomen, das mit Hydroxy oder Alkoxy mit 1 bis 4 C-Atomen substituiert ist;

-F; -Cl; -Br; $-NO_2$; $-CF_3$; -CN; $-CONR^2R^3$; $-COOR^3$; $COR^3$; $-SO_2-NR^2R^3$; $-SO_2-OR^3$; $-SO_2-R^3$; $-SO_2NH_2$; 5-$R^3$-substituiertes-1,2,4-Oxadiazol-3-yl;

$R^2$: -H; Alkyl mit 1 bis 8 C-Atomen; Alkyl mit 2 bis 4 C-Atomen, das mit Hydroxy oder Alkoxy mit 1 bis 4 C-Atomen oder Alkoxy-alkoxy mit insgesamt 2 bis 8 C-Atomen oder mit Allyloxy substituiert ist; gegebenenfalls substituiertes Alkenyl mit 3 bis 5 C-Atomen; gegebenenfalls substituiertes Phenyl oder Benzyl;

$R^3$: mit Ausnahme von Wasserstoff eine der Bedeutungen von $R^2$ und darüber hinaus Furfuryl oder Tetrahydrofurfuryl bedeuten und wobei das Gewichtsverhältnis der Komponenten A : B = (10 bis 90) : (90 bis 10) beträgt.

2. Mischung gelber Dispersionsfarbstoffe nach Anspruch 1, dadurch gekennzeichnet, daß das Gewichtsverhältnis der Komponenten A : B = (20 bis 70) : (80 bis 30) beträgt.

3. Mischung gelber Dispersionsfarbstoffe nach Anspruch 1 und/oder 2, dadurch gekennzeichnet, daß die Komponente B einen Farbstoff der Formel II

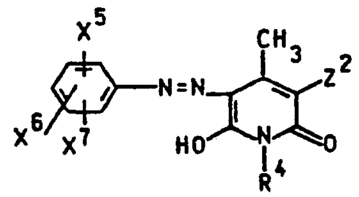

(II)

enthält oder aus ihm besteht, wobei

$R^4$ eine der Bedeutungen von $R^1$

$Z^2$ eine der Bedeutungen von $Z^1$

$X^5$ eine der Bedeutungen von $X^1$

$X^6$ eine der Bedeutungen von $X^4$ und darüber hinaus auch $-O-SO_2-NR^2R^3$; $-OSO_2R^3$; $-O-CO-R^3$; $-O-COOR^3$;

$X^7$ eine der Bedeutungen von $X^1$ und darüber hinaus gegebenenfalls substituiertes Phenoxy besitzen.

4. Mischung gelber Dispersionsfarbstoffe nach einem oder mehreren der Ansprüche 1 bis 3, dadurch gekennzeichnet, daß die Komponente B einen anderen oder mehrere andere Farbstoffe der Formel I enthält oder aus ihm oder ihnen besteht.

5. Mischung gelber Dispersionsfarbstoffe nach einem oder mehreren der Ansprüche 1 bis 4, dadurch gekennzeichnet, daß die Komponente B aus einem oder mehreren Farbstoffen der Formeln III bis IX besteht oder diese Farbstoffe enthält

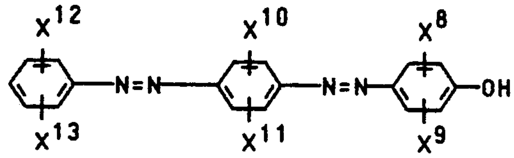

(III)

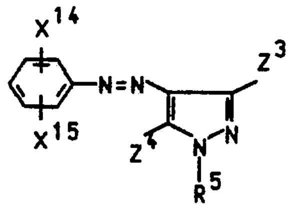

(IV)

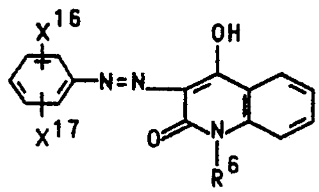

(V)

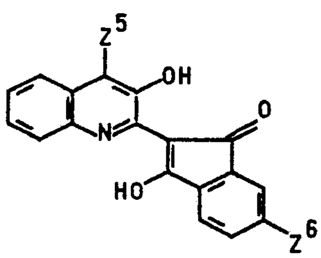

(VI)

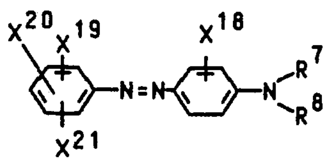

(VII)

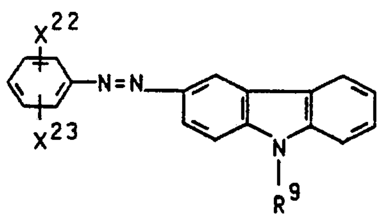

(VIII)

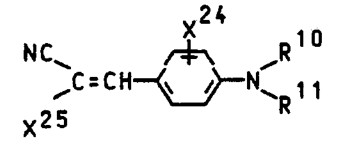 (IX)

wobei

$R^5$: eine der Bedeutungen von $R^1$;

$R^6$: -H; Alkyl mit 1 bis 4 C-Atomen;

$R^7$: -H; Alkyl mit 1 bis 4 C-Atomen, das mit $-COOR^{12}$, -CN, Phenyl oder mit -Cl substituiert sein kann; Alkyl mit 2 bis 4 C-Atomen, substituiert mit Hydroxy, mit Alkoxy mit 1 bis 4 C-Atomen, mit Phenoxy oder mit $-OCO-R^{12}$;

$R^8$: eine der Bedeutungen von $R^7$ und darüber hinaus Phenyl;

$R^9$: -H; Alkyl mit 1 bis 4 C-Atomen, das mit $-COOR^{12}$ oder mit -CN substituiert sein kann; Alkyl mit 2 bis 4 C-Atomen, substituiert mit Hydroxy, mit Alkoxy mit 1 bis 4 C-Atomen, mit Hydroxyalkyloxy mit 2 bis 4 C-Atomen, mit Alkoxy-alkoxy mit insgesamt 2 bis 8 C-Atomen, mit Alkoxy-alkoxy-alkoxy mit insgesamt 3 bis 12 C-Atomen;

$R^{10}$: eine der Bedeutungen von $R^7$;

$R^{11}$: -H; Alkyl mit 1 bis 4 C-Atomen; Alkyl mit 2 bis 4 C-Atomen, substituiert mit -Cl oder mit dem Rest Y;

$R^{12}$: Alkyl mit 1 bis 4 C-Atomen; Alkyl mit 2 bis 4 C-Atomen, substituiert mit Alkoxy mit 1 bis 4 C-Atomen, mit Phenoxy, mit Allyloxy oder mit -OH;

$X^8$: eine der Bedeutungen von $X^1$;

$X^9$: -H; Alkyl mit 1 bis 4 C-Atomen;

$X^{10}$: -H; Alkyl mit 1 bis 4 C-Atomen; Alkoxy mit 1 bis 4 C-Atomen; Alkoxy mit 2 bis 4 C-Atomen, substituiert mit -OH, mit Alkoxy mit 1 bis 4 C-Atomen; -F; -Cl; -Br;

$X^{11}$: eine der Bedeutungen von $X^{10}$ und zusätzlich Alkylcarbonylamino mit 1 bis 4 C-Atomen im Alkylrest, oder $X^{10}$ und $X^{11}$ zusammen 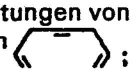 ;

$X^{12}$: eine der Bedeutungen von $X^1$;

$X^{13}$: eine der Bedeutungen von $X^2$;

$X^{14}$: eine der Bedeutungen von $X^6$ und zusätzlich gegebenenfalls substituiertes Phenoxy;

$X^{15}$: eine der Bedeutungen von $X^1$ und zusätzlich $-NO_2$ oder Phenylazo;

$X^{16}$: -H; $-NO_2$; Alkyl mit 1 bis 4 C-Atomen; Phenylazo; Phenylazo, im Phenylkern ein- oder zweimal mit -Cl, $-CH_3$, $-OCH_3$ und/oder $-NO_3$ substituiert;

$X^{17}$: -H; -F; -Cl; -Br; Alkyl mit 1 bis 4 C-Atomen; Alkoxy mit 1 bis 4 C-Atomen; Alkoxy mit 2 bis 4 C-Atomen, substituiert mit Alkoxy mit 1 bis 4 C-Atomen;

$X^{18}$: -H; -Cl; -Br; Alkyl mit 1 bis 4 C-Atomen; Alkylcarbonylamino mit 1 bis 4 C-Atomen im Alkylrest, der gegebenenfalls mit -Cl, -Br, -OH oder Alkoxy mit 1 bis 4 C-Atomen substituiert sein kann;

$X^{19}$: $-NO_2$; $-CONR^2R^3$; $-SO_2NR^2R^3$; $-So_2-OR^3$; $-COR^3$; $-COOR^3$; -CN; $-CF_3$;

$X^{20}$: -H; $-COOR^3$; -Cl; -Br; CN; $-NO_2$;

$X^{21}$: -H; -Cl; -Br;

$X^{22}$: $-NO_2$; $-COOR^3$; $-CONR^2R^3$; $-SO_2NR^2R^3$; $-COR^3$; $-SO_2-OR^3$;

$X^{23}$: -H; -F; -Cl; -Br; -CN;

$X^{24}$: -H; -F; -Cl; -Br; Alkyl mit 1 bis 4 C-Atomen; Alkoxy mit 1 bis 4 C-Atomen; Alkoxy mit 2 bis 4 C-Atomen, substituiert mit Alkoxy mit 1 bis 4 C-Atomen;

$X^{25}$: -CN; $-COOR^3$; $CONR^2R^3$;

Y: -O-Phenyl, wobei der Phenylrest gegebenenfalls mit Cyclopentyl, Cyclohexyl, Alkyl mit 1 bis 4 C-Atomen und/oder Alkoxy mit 1 bis 4 C-Atomen, mit -Cl und/oder -Br mono- oder disubstituiert ist; -CO-Phenyl, wobei der Phenylrest gegebenenfalls mit Cyclopentyl, Cyclohexyl, Alkyl mit 1 bis 4 C-Atomen und/oder Alkoxy mit 1 bis 4 C-Atomen, mit -Cl und/oder -Br mono- oder disubstituiert ist; -O-CO-Phenyl, wobei der Phenylrest gegebenenfalls mit Cyclopentyl, Cyclohexyl, Alkyl mit 1 bis 4 C-Atomen und/oder Alkoxy mit 1 bis 4 C-Atomen, mit -Cl und/oder -Br mono- oder disubstituiert ist; -COO-Phenyl, wobei der Phenylrest gegebenenfalls mit Cyclopentyl, Cyclohexyl, Alkyl mit 1 bis 4 C-Atomen und/oder Alkoxy mit 1 bis 4 C-Atomen, mit -Cl und/oder -Br mono- oder disubstituiert ist; -O-COO-Phenyl, wobei der Phenylrest gegebenenfalls mit Cyclopentyl, Cyclohexyl, Alkyl mit 1 bis 4 C-Atomen und/oder Alkoxy mit 1 bis 4 C-Atomen, mit -Cl und/oder -Br mono- oder disubstituiert ist; -O-CO-NH-Phenyl, wobei der Phenylrest gegebenenfalls mit Cyclopentyl, Cyclohexyl, Alkyl mit 1 bis 4 C-Atomen und/oder Alkoxy mit 1 bis 4 C-Atomen, mit -Cl und/oder -Br mono- oder disubstituiert ist; -S-Benzthiazolyl (2);

$Z^3$: Alkyl mit 1 bis 4 C-Atomen; $-CONH_2$; $-CONH(C_1-C_4Alkyl)$; $-CON(C_1-C_4Alkyl)$ $(C_1-C_4Alkyl)$ ;

$Z^4$: -OH; $-NH_2$;

$Z^5$: -H; -Br; -Cl;

$z^6$: -H; $-CONH_2$; $-CONH(C_1-C_4Alkyl)$; $-CON(C_1-C_4Alkyl)-(C_1C_4Alkyl)$ bedeuten.

6. Mischung gelber Dispersionsfarbstoffe nach einem oder mehreren der Ansprüche 1 bis 5, dadurch gekennzeichnet, daß der Rest $R^1$ Alkyl mit 1 - 8 C-Atomen; Alkyl mit 1 bis 5 C-Atomen, das mit Alkoxycarbonyl mit 1 bis 4 C-Atomen, insbesondere 1 bis 2 C-Atomen, im Alkoxyrest substituiert ist; Alkyl mit 2 bis 8 C-Atomen, das mit Hydroxy, Alkoxy mit 1-4 C-Atomen, Alkylcarbonyloxy mit 1 -4 C-Atomen, insbesondere 1 oder 2 C-Atomen im Alkylrest, substituiert ist, bedeutet.

7. Mischung gelber Dispersionsfarbstoffe nach einem oder mehreren der Ansprüche 1 bis 6, dadurch gekennzeichnet, daß $X^1$, $X^5$: -H; Alkyl mit 1 bis 4 C-Atomen; Alkoxy mit 1 bis 4 C-Atomen; Alkoxy mit 2 bis 4 C-Atomen, das durch Alkoxy mit 1 bis 4 C-Atomen substituiert ist; -F; -Cl; -Br;

$X^2$: -H; Alkyl mit 1 bis 4 C-Atomen; -Cl; -Br; $-NO_2$, oder $X^1$ und $X^2$ zusammen auch

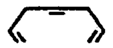 ;

$X^3$: -H; Alkyl mit 1 bis 4 C-Atomen; Alkoxy mit 1 bis 4 C-Atomen; Alkoxy mit 2 bis 4 C-Atomen, das mit Alkoxy mit 1 bis 2 C-Atomen substituiert ist; -F; -Cl; -Br;

$X^4$: -H; -F; -Cl; -Br; $-NO_2$; Alkyl mit 1 bis 4 C-Atomen; $-COOR^3$, wobei $R^3$ Alkyl mit 1 bis 4 C-Atomen oder Alkyl mit 2 bis 4 C-Atomen bedeutete, das mit Alkoxy mit 1 bis 4 C-Atomen substituiert ist;

$X^6$: -H; $-NO_2$; -Cl; Alkyl mit 1 bis 4 C-Atomen; Alkyl mit 2 bis 4 C-Atomen, substituiert mit Alkoxy mit 1 bis 4 C-Atomen oder mit Allyloxy; $-SO_2NR^2R^3$; $-COR^3$; $-CONR^2R^3$; $-SO_2NH_2$; $-COOR^3$; $-OSO_2R^3$; $-OCO-R^3$; $-OSO_2NR^2R^3$;

$X^7$: -H; Alkyl mit 1 bis 4 C-Atomen; Phenoxy;

$X^8$: -H; Alkyl mit 1 bis 4 C-Atomen; -Cl; -Br; Alkoxy mit 1 bis 4 C-Atomen; Alkoxy mit 2 bis 4 C-Atomen, das mit Hydroxy oder Alkoxy mit 1 bis 4 C-Atomen substituiert ist;

$X^9$: -H; -Cl; Alkyl mit 1 bis 4 C-Atomen;

$X^{10}$: H; Alkyl mit 1 bis 4 C-Atomen; Alkoxy mit 1 bis 4 C-Atomen; Alkoxy mit 2 bis 4 C-Atomen substituiert mit Alkoxy mit 1 bis 4 C-Atomen;

$X^{11}$: wie $X^{10}$ und darüber hinaus -Cl; OH, oder $X^{10}$ und $X^{11}$ zusammen auch 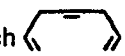 ;

$X^{12}$; -H; $NO_2$; -OH; Alkyl mit 1 bis 4 C-Atomen; Alkoxy mit 1 bis 4 C-Atomen; Hydroxyalkoxy mit 2 bis 4 C-Atomen, Alkylcarbonylamino mit 1 bis 4 C-Atomen im Alkylrest;

$X^{13}$: H; Alkyl mit 1 bis 4 C-Atomen;

$X^{14}$: -H; $-NO_2$; Alkyl mit 1 bis 4 C-Atomen, Alkoxy mit 1 bis 4 C-Atomen; $-COOR^3$; $-SO_2NR^2R^3$;

$X^{15}$: -H; $-NO_2$; -Cl; Phenylazo;

$X^{16}$: -H; $-NO_2$; Phenylazo; Alkyl mit 1 bis 4 C-Atomen;

$X^{17}$: -H; -Cl; -Br; -F; Alkyl mit 1 bis 4 C-Atomen; Alkoxy mit 1 bis 4 C-Atomen;

$X^{18}$; -H; -Cl; Alkyl mit 1 bis 4 C-Atomen; Alkylcarbonylamino mit 1 bis 4 C-Atomen im Alkylrest, das mit Alkoxy mit 1 bis 4 C-Atomen substituiert sein kann;

$X^{19}$: $-NO_2$; Alkoxy-carbonyl mit 1 bis 4 C-Atomen im Alkoxyrest; $-SO_2N(C_1\text{-}C_4Alkyl)(C_1\text{-}C_4Alkyl)$; Alkoxy-sulfonyl mit 1 bis 4 C-Atomen im Alkoxyrest;

$X^{20}$: -H; -Cl; -Br; -CN; $-NO_2$;

$X^{21}$: -H; -Cl; -Br;

$X^{22}$: $-NO_2$; -Cl;

$X^{23}$: -H; -F; -Cl; -Br; Alkyl mit 1 bis 4 C-Atomen;

$X^{24}$: -H; -Cl; Alkyl mit 1 bis 4 C-Atomen; Alkoxy mit 1 bis 4 C-Atomen;

$X^{25}$: -CN; Alkoxycarbonyl mit 1 bis 4 C-Atomen, das mit Alkoxy mit 1 bis 4 C-Atomen, Phenoxy oder Phenyl substituiert sein kann;

$R^5$: -H; Alkyl mit 1 bis 4 C-Atomen; Phenyl; Hydroxyphenyl; 1,1-Dioxo-tetrahydro-thiophen-3-yl; Alkyl mit 2 bis 4 C-Atomen substituiert mit Phenylaminocarbonyloxy;

$R^7$: -H; Alkyl mit 1 bis 4 C-Atomen; Benzyl; $(C_1\text{-}C_4)$Alkoxy-carbonyl-$(C_1\text{-}C_4)$alkyl; Alkyl mit 2 bis 4 C-Atomen, das vorzugsweise in Endstellung mit Hydroxy, $(C_1\text{-}C_4Alkyl)$-carbonyloxy, -CN, -Cl, Phenyl, $C_1\text{-}C_4$Alkoxy, Phenoxy, $(C_1\text{-}C_4Alkoxy)$-carbonyloxy oder mit Phenoxy-$(C_1\text{-}C_4\text{-}alkyl)$-carbonyloxy substituiert ist;

$R^8$: mit Ausnahme von -H eine der Bedeutungen von $R^7$ und darüber hinaus auch Phenyl oder Benzyl;

$R^9$, $R^{10}$: -H; Alkyl mit 1 bis 4 C-Atomen;

$R^{11}$: 2-(Phenoxy)ethyl; 2-(Cyclohexyl- oder Cyclopentyl-phenoxy)-ethyl; 2-(Dichlorophenylaminocarbonyloxy)-ethyl; 2-(Phenylaminocarbonyloxy)-ethyl; 2-Chloro-ethyl; $-(CH_2)_2$-S-benzthiazolyl (2) ;

$Z^3$: Alkyl mit 1 bis 4 C-Atomen; $-CONH_2$ bedeuten.

8. Mischung gelber Dispersionsfarbstoffe nach einem oder mehreren der Ansprüche 1 bis 7, dadurch gekennzeichnet, daß

$X^1$: -H; -Cl; -F; Methyl; Methoxy;

$X^2$: -H; -Cl; $-NO_2$; Methyl;

$X^3$: -H; Methyl; Methoxy; Ethoxy; -F; -Cl; -Br;

$X^4$: -H; -Cl; Methyl; $-NO_2$; $-COOCH_3$; $-COOC_2H_5$; $-COO(CH_2)_2OCH_3$; $-COO(CH_2)_2\text{-}OC_2H_5$;

$X^5$: -H; -Cl; Methyl; Methoxy;

$X^6$: -H; -Cl; $NO_2$; Methyl; $-SO_2NH_2$; $-CONH(C_2\text{-}C_8Alkyl)$; $-COO(C_2\text{-}C_8Alkyl)$; $-SO_2NH(C_2\text{-}C_8Alkyl)$; Furylmethyloxycarbonyl; $-COO(CH_2)_2OCH_2CH{=}CH_2$; Benzylcarbonyloxy; $-OSO_2\text{-}C_6H_5$; $-OSO_2\text{-}N(CH_3)_2$; $-CO\text{-}C_6H_5$, wobei der Phenylrest auch mit Alkyl mit 1 bis 4 C-Atomen substituiert sein kann; $-COOCH_2C_6H_5$; $-COO(CH_2)_2O(CH_2)_2OCH_3$;

$X^7$, $X^8$, $X^9$, $X^{13}$: -H; Methyl;

$X^{10}$: -H; Methyl; Methoxy;

$X^{11}$: -H; Methyl; Methoxy; -Cl; -OH, oder $X^{10}$ und $X^{11}$ zusammen 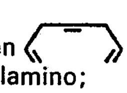 ;

$X^{12}$: -H; Methyl; Methoxy; $-NO_2$; -OH, 2-Hydroxyethoxy; Acetylamino;

$X^{14}$: -H; Methyl; Methoxy; $-NO_2$; $-COOCH_3$; $-SO_2N(C_1-C_2Alkyl)-(C_1-C_2Alkyl)$;
$X^{15}$: -H; $-NO_2$; -Cl; Phenylazo;
$X^{16}$: -H; $-NO_2$; Phenylazo;
$X^{17}$; -H; Methyl;
$X^{18}$: -H, -Cl; Methyl; Acetylamino;
$X^{19}$: $-NO_2$; Methoxycarbonyl; Dimethylaminosulfonyl;
$X^{20}$: -H; -Cl; -Br; -CN;
$X^{21}$: -H; -Cl; -Br;
$X^{22}$: $-NO_2$;
$X^{23}$: -H; -Cl; -Br;
$X^{24}$: -H; -Cl; Methyl; Methoxy;
$X^{25}$: -CN;
$R^5$: -H; Phenyl; Hydroxyphenyl; 2-(Phenylaminocarbonyl)ethyl; 1,1-Dioxo-tetrahydro-thiophen-3-yl;
$R^6$: -H; Methyl;
$R^7$: -H; Methyl; Ethyl; Propyl; Butyl; 2-Hydroxyethyl; 2-Cyanoethyl; 2-Chloroethyl; 2-Acetyloxy-ethyl; 2-(Methoxycarbonyl)-ethyl; 2-(Phenoxymethylcarbonyloxy)-ethyl; 2-(Methylcarbonyloxy)-ethyl; 2-(Ethylcarbonyloxy)-ethyl;
$R^8$; -H; Phenyl; 2-Cyanoethyl; 2-Hydroxyethyl; 2-(Ethylcarbonyloxyl)-ethyl; 2-(Methoxycarbonyl)-ethyl;
$R^{11}$: 2-(Phenoxy)-ethyl; 2-(4-cyclohexyl-phenoxy)-ethyl; 2-(3,4-Dichlorophenylaminocarbonyloxy)-ethyl; 2-(Phenylaminocarbonyloxy)-ethyl; 2-Chloro-ethyl;
$Z^3$: Methyl; $-CONH_2$;
$Z^4$: -OH; $-NH_2$;
$Z^5$: -H; -Br bedeuten.

9. Verfahren zur Herstellung gelber Dispersionsfarbstoffe aus einem oder mehreren der Ansprüche 1 bis 8, dadurch gekennzeichnet, daß bereits gefinishte Einzelfarbstoffe der Komponenten A und B miteinander gemischt oder daß ungefinishte Einzelfarbstoffe der Komponenten A und B miteinander gemischt und anschließend oder während des Mischens gefinisht werden.

10. Verfahren zum Färben von Synthesefasern, insbesondere Polyesterfasern, nach dem Hochtemperatur-Ausziehverfahren oder nach dem Thermosol-Verfahren oder zum Bedrucken von Synthesefasern, insbesondere Polyesterfasern, dadurch gekennzeichnet, daß eine Farbstoffmischung nach einem oder mehreren der Ansprüche 1 bis 8 eingesetzt wird.

## Claims

1. Mixture of yellow disperse dyestuffs, characterized in that it consists of dyestuff components A and B or contains these dyestuff components, dyestuff component A consisting of a dyestuff of the formula I

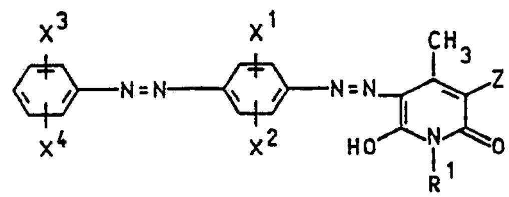

(I)

and dyestuff component B consisting of one or more other dyestuffs of the formula I and/or one or more other yellow, golden yellow or yellow-brown disperse dyestuffs from the series comprising monoazo, disazo and methine dyestuffs, and $R^1$ denotes -H; alkyl with 1 to 8 C atoms, which can be substituted by -Cl, -Br, -CN, phenyl, $(C_1-C_4)$alkyl-substituted phenyl or alkoxycarbonyl which has 1 to 4 C atoms in the alkoxy group and is optionally substitutd by -Cl, -Br, phenyl, -CN, $(C_1-C_4)$alkoxy$(C_1-C_4)$alkoxy-$(C_1-C_4)$alkoxy, phenoxy, $(C_3-C_5)$alkenyloxy, cyclopentyloxy or cyclohexyloxy; alkyl with 2 to 4 C atoms, which can be substituted by hydroxyl, alkoxy with 1 to 4 C atoms, alkoxy-alkoxy with a total of 2 to 8 C atoms, phenoxy which is optionally substituted by $(C_1-C_6)$alkyl, cyclopentyl or cyclohexyl, alkenyloxy with 3 to 5 C atoms, cyclopentyloxy, cyclohexyloxy, furfuryloxy, tetrahydrofurfuryloxy, alkylcarbonyloxy which has 1 to 4 C atoms in the alkyl group and is optionally substituted by -Cl, -Br, -CN, phenyl, phenoxy or $(C_1-C_4)$-alkoxy, phenylcarbonyloxy which is optionally monosubstituted or polysubstituted by indnpendent substituents from the group comprising -Cl, -Br and methyl, alkoxycarbonyloxy which is optionally substituted by -Cl, -Br, -CN, phenyl, phenoxy or $(C_1-C_4)$alkoxy, phenoxycarbonyloxy which is optionally monosubstituted or polysubstituted by independent substituents from the group comprising -Cl, -Br and methyl, phenylaminocarbonyloxy which is optionally monosubstituted or polysubstituted by independent substituents from the group comprising -Cl, -Br and methyl, or mono- or dialkyl-substituted aminocarbonyloxy which has 1 to 4 C atoms in the alkyl radicals and is optionally substituted by -OH, $(C_1-C_4)$alkoxy or phenoxy in the alkyl radicals; alkenyl with 3 to 5 C atoms;

cyclopentyl; cyclohexyl; optionally substituted phenyl; phenylamino; benzyl; furfuryl; tetrahydrofurfuryl or 1,1-dioxotetrahydrothien-3-yl; $Z^1$ denotes -CN or -$CONR^2R^3$; $X^1$ denotes -H; alkyl with 1 to 4 C atoms, which can be substituted by hydroxyl or alkoxy with 1 to 4 C atoms; alkoxy with 1 to 4 C atoms; alkoxy with 2 to 4 C atoms, which is substituted by hydroxyl or alkoxy with 1 to 4 C atoms; -F; -Cl; -Br; $X^2$ denotes -H; alkyl with 1 to 4 C atoms; alkoxy with 1 to 4 C atoms; alkoxy with 2 to 4 C atoms, which is substituted by hydroxyl or alkoxy with 1 to 4 C atoms; -F; -Cl; -Br or alkylcarbonylamino with 1 to 4 C atoms in the alkyl radical; -OH; or -$NO_2$; or $X^1$ and $X^2$ together denote

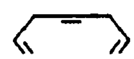 ;

$X^3$ denotes one of the meanings of $X^1$; $X^4$ denotes -H; alkyl with 1 to 4 C atoms, which can be substituted by hydroxyl or alkoxy with 1 to 4 C atoms; alkoxy with 1 to 4 C atoms; alkoxy with 2 to 4 C atoms; which is substituted by hydroxyl or alkoxy with 1 to 4 C atoms; -F; -Cl, -Br; -$NO_2$; -$CF_3$; -CN; $CONR^2R^3$; -$COOR^3$; -$COR^3$; -$SO_2$-$NR^2R^3$; -$SO_2$-$OR^3$; -$SO_2NH_2$; or 5-$R^3$-sub-stituted-1,2,4-oxadiazol-3-yl; $R^2$ denotes -H; alkyl with 1 to 8 C atoms; alkyl with 2 to 4 C atoms, which is substituted by hydroxyl or alkoxy with 1 to 4 C atoms or alkoxy-alkoxy with a total of 2 to 8 C atoms or allyloxy; optionally substituted alkenyl with 3 to 5 C atoms; or optionally substituted phenyl or benzyl; and $R^3$ denotes one of the meanings of $R^2$, with the exception of hydrogen, and moreover furfuryl or tetrahydrofurfuryl, the weight ratio of components A : B being (10 to 90) : (90 to 10).

2.Mixture of yellow disperse dyestuffs according to Claim 1, characterized in that the weight ratio of components A : B is (20 to 70) : (80 to 30).

3. Mixture of yellow disperse dyestuffs according to Claim 1 and/or 2, characterized in that component B contains or consists of a dyestuff of the formula II

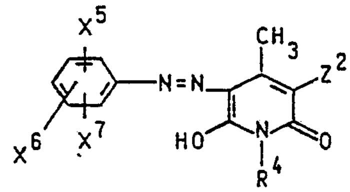

(II)

wherein $R^4$ has one of the meanings of $R^1$, $Z^2$ has one of the meanings of $Z^1$, $X^5$ has one of the meanings of $X^1$, $X^6$ has one of the meanings of $X^4$, and moreover also denotes -O-$SO_2$-$NR^2R^3$; -$OSO_2R^3$; -O-CO-$R^3$ or -O-$COOR^3$; and $X^7$ has one of the meanings of $X^1$, and moreover optionally substituted phenoxy.

4. Mixture of yellow disperse dyestuffs according to one or more of Claims 1 to 3, characterized in that component B contains a different or several different dyestuffs of the formula I or consists of it or them.

4. Mixture of yellow disperse dyestuffs according to one or more of Claims 1 to 4, characterized in that component B consists of one or more dyestuffs of the formulae III to IX or contains these dyestuffs

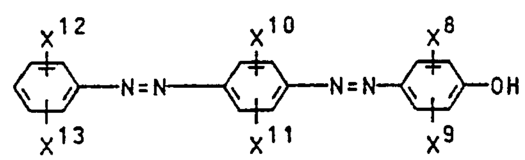

(III)

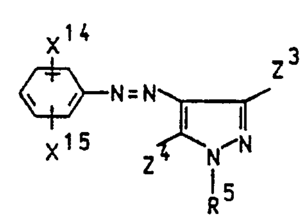

(IV)

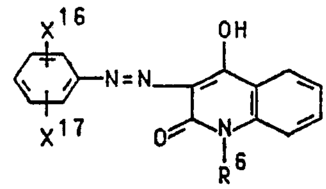

(V)

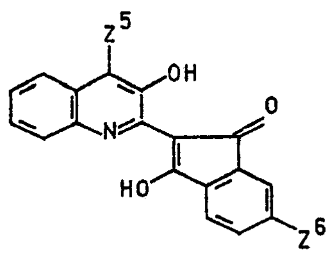

(VI)

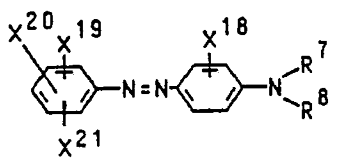

(VII)

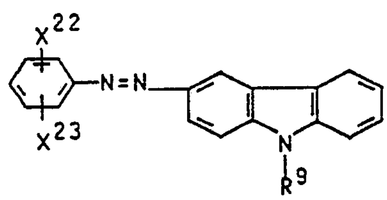

(VIII)

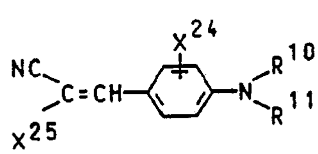

(IX)

$R^5$ has one of the meanings of $R^1$;
$R^6$ denotes -H
or alkyl with 1 to 4 C atoms; $R^7$ denotes -H; alkyl with 1 to 4 C atoms, which can be substituted by $-COOR^{12}$, -CN, phenyl or -Cl; or alkyl with 2 to 4 C atoms, substituted by hydroxyl, alkoxy with 1 to 4 C atoms, phenoxy or $-OCO-R^{12}$; $R^8$ has one of the meanings of $R^7$, and moreover phenyl; $R^9$ denotes -H; alkyl with 1 to 4 C atoms, which can be substituted by $-COOR^{12}$ or -CN; alkyl with 2 to 4 C atoms, substituted by hydroxyl, alkoxy with 1 to 4 C atoms, hydroxyalkoxy with 2 to 4 C atoms, alkoxy-alkoxy with a total of 2 to 8 C atoms or alkoxy-alkoxy-alkoxy with a total of 3 to 12 C atoms; $R^{10}$ has one of the meanings of $R^7$; $R^{11}$ denotes -H; alkyl with 1 to 4 C atoms; or alkyl with 2 to 4 C atoms, substituted by -Cl or the radical Y; $R^{12}$ denotes alkyl with 1 to 4 C atoms; alkyl with 2 to 4 C atoms, substituted by alkoxy with 1 to 4 C atoms, phenoxy, allyloxy or -OH; $X^8$ has one of the meanings of $X^1$; $X^9$ denotes -H; or alkyl with 1 to 4 C atoms; $X^{10}$ denotes -H; alkyl with 1 to 4 C atoms; alkoxy

with 1 to 4 C atoms; alkoxy with 2 to 4 C atoms, substituted by -OH or alkoxy with 1 to 4 C atoms; -F; -Cl; or -Br; $X^{11}$ has one of the meanings of $X^{10}$, and additionally denotes alkylcarbonylamino with 1 to 4 C atoms in the alkyl radical; or $X^{10}$ and $X^{11}$ together denote

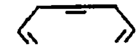 ;

$X^{12}$ has one of the meanings of $X^1$; $X^{13}$ has one of the meanings of $X^2$; $X^{14}$ has one of the meanings of $X^6$, and additionally optionally substituted phenoxy; $X^{15}$ has one of the meanings of $X^6$, and additionally $-NO_2$ or phenylazo; $X^{16}$ denotes -H; $-NO_2$; alkyl with 1 to 4 C atoms; phenylazo; or phenylazo which is mono- or disubstituted in the phenyl nucleus by -Cl, $-CH_3$, $-OCH_3$ and/or $-NO_2$;

$X^{17}$ denotes -H; -F; -Cl; -Br; alkyl with 1 to 4 C atoms; alkoxy with 1 to 4 C atoms; or alkoxy with 1 to 4 C atoms; substituted by alkoxy with 1 to 4 C atoms; $X^{18}$ denotes -H; -Cl; -Br; alkyl with 1 to 4 C atoms; or alkylcarbonylamino with 1 to 4 C atoms in the alkyl radical, which can optionally be substituted by -Cl, -Br, -OH or alkoxy with 1 to 4 C atoms; $X^{19}$ denotes $-NO_2$; $-CONR^2R^3$; $-SO_2NR^2R^3$; $-SO_2-OR^3$; $-COR^3$; $-COOR^3$; -CN; or $-CF_3$; $X^{20}$ denotes -H; $-COOR^3$; -Cl; -Br; -CN; or $-NO_2$; $X^{21}$ denotes -H; -Cl; or -Br; $X^{22}$ denotes $-NO_2$, $-COOR^3$; $-CONR^2R^3$; $-SO_2NR^2R^3$; $-COR^3$; or $-SO_2-OR^3$; $X^{23}$ denotes -H; -F; -Cl; -Br; or -CN; $X^{24}$ denotes -H; -F; -Cl; -Br; alkyl with 1 to 4 C atoms; alkoxy with 1 to 4 C atoms; or alkoxy with 2 to 4 C atoms, substituted by alkoxy with 1 to 4 C atoms; $X^{25}$ denotes -CN; $-COOR^3$; or $CONR^2R^3$; Y denotes -O-phenyl, the phenyl radical optionally being mono- or disubstituted by cyclopentyl, cyclohexyl, alkyl with 1 to 4 C atoms and/or alkoxy with 1 to 4 C atoms, -Cl and/or -Br; -CO-phenyl, the phenyl radical optionally being mono- or disubstituted by cyclopentyl, cyclohexyl, alkyl with 1 to 4 C atoms and/or alkoxy with 1 to 4 C atoms, -Cl and/or -Br; -O-CO-phenyl, the phenyl radical optionally being mono- or disubstituted by cyclopentyl, cyclohexyl, alkyl with 1 to 4 C atoms and/or alkoxy with 1 to 4 C atoms, -Cl and/or -Br; -COO-phenyl, the phenyl radical optionally being mono- or disubstituted by cyclopentyl, cyclohexyl, alkyl with 1 to 4 C atoms and/or alkoxy with 1 to 4 C atoms, -Cl and/or -Br; -O-COO- phenyl, the phenyl radical optionally being mono-or disubstituted by cyclopentyl, cyclohexyl, alkyl with 1 to 4 C atoms and/or alkoxy with 1 to 4 C atoms, -Cl and/or -Br; -O-CO-NH-phenyl, the phenyl radical optionally being mono- or disubstituted by cyclopentyl, cyclohexyl, alkyl with 1 to 4 C atoms and/or alkoxy with 1 to 4 C atoms, -Cl and/or -Br; or -S-benzothiazol-2-yl; $Z^3$ denotes alkyl with 1 to 4 C atoms; $-CONH_2$; $-CONH(C_1-C_4\text{-alkyl})$; or $-CON(C_1-C_4\text{-alkyl})(C_1-C_4\text{-alkyl})$; $Z^4$ denotes -OH; $-NH_2$; $Z^5$ denotes -H; -Br; or -Cl; and $Z^6$ denotes -H; $-CONH_2$; $-CONH(C_1-C_4\text{-alkyl})$ or $-CON(C_1-C_4\text{-alkyl})\ (C_1-C_4\text{-alkyl})$.

6. Mixture of yellow disperse dyestuffs according to one or more of Claims 1 to 5, characterized in that the radical $R^1$ denotes alkyl with 1 to 8 C atoms; alkyl with 1 to 5 C atoms, which is substituted by alkoxycarbonyl with 1 to 4 C atoms, in particular 1 or 2 C atoms, in the alkoxy radical; or alkyl with 2 to 8 C atoms, wich is substituted by hydroxyl, alkoxy with 1 to 4 C atoms or alkylcarbonyloxy with 1 to 4 C atoms, in particular 1 or 2 C atoms, in the alkyl radical.

7. Mixture of yellow disperse dyestuffs according to one or more of Claims 1 to 6, characterized in that $X^1$ and $X^5$ denote -H; alkyl with 1 to 4 C atoms; alkoxy with 1 to 4 C atoms; alkoxy with 2 to 4 C atoms, which is substituted by alkoxy with 1 to 4 C atoms; -F; -Cl; or -Br; $X^2$ denotes -H; alkyl with 1 to 4 C atoms; -Cl; -Br; or $-NO_2$; or $X^1$ and $X^2$ together denote also

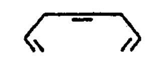 ;

$X^3$ denotes -H; alkyl with 1 to 4 C atoms; alkoxy with 1 to 4 C atoms; alkoxy with 2 to 4 C atoms, which is substituted by alkoxy with 1 or 2 C atoms; -F; -Cl; or -Br;

$X^4$ denotes -H; -F; -Cl; -Br; $-NO_2$; alkyl with 1 to 4 C atoms; or $-COOR^3$, wherein $R^3$ denotes alkyl with 1 to 4 C atoms or alkyl with 2 to 4 C atoms, which is substituted by alkoxy with 1 to 4 C atoms; $X^6$ denotes -H; $-NO_2$; -Cl; alkyl with 1 to 4 C atoms; alkyl with 2 to 4 C atoms, substituted by alkoxy with 1 to 4 C atoms or allyloxy; $-SO_2NR^2R^3$; $-COR^3$; $-CONR^2R^3$; $-SO_2NH_2$; $-COOR^3$; $-OSO_2R^3$; $-OCO-R^3$; or $-OSO_2NR^2R^3$; $X^7$ denotes -H; alkyl with 1 to 4 C atoms; or phenoxy; $X^8$ denotes -H; alkyl with 1 to 4 C atoms, -Cl; -Br; alkoxy with 1 to 4 C atoms; or alkoxy with 2 to 4 C atoms, which is substituted by hydroxyl or alkoxy with 1 to 4 C atoms; $X^9$ denotes -H; -Cl; or alkyl with 1 to 4 C atoms; $X^{10}$ denotes -H; alkyl with 1 to 4 C atoms; alkoxy with 1 to 4 C atoms; or alkoxy with 2 to 4 C atoms, substituted by alkoxy with 1 to 4 C atoms; $X^{11}$ is as $X^{10}$, and moreover denotes -Cl; or OH; or $x^{10}$ and $X^{11}$ together denotes also

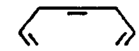 ;

$X^{12}$ denotes -H; $-NO_2$; -OH; alkyl with 1 to 4 C atoms; alkoxy with 1 to 4 C atoms; alkoxy with 2 to 4 C atoms, alkylcarbonylamino with 1 to 4 C atoms in the alkyl radical; $X^{13}$ denotes -H; or alkyl with 1 to 4 C atoms;

$X^{14}$ denotes -H; $-NO_2$; alkyl with 1 to 4 C atoms; alkoxy with 1 to 4 C atoms; $-COOR^3$; or $-SO_2NR^2R^3$; $X^{15}$ denotes -H; $-NO_2$; -Cl; or phenylazo; $X^{16}$ denotes -H; $-NO_2$ phenylazo or alkyl with 1 to 4 C atoms; $X^{17}$ denotes -H; -Cl; -Br; -F; alkyl with 1 to 4 C atoms; or alkoxy with 1 to 4 C atoms; $X^{18}$ denotes -H; -Cl; alkyl with 1 to 4 C atoms; or alkylcarbonylamino with 1 to 4 C atoms in the alkyl radical, which can be substituted by alkoxy with 1

to 4 C atoms; $X^{19}$ denotes $-NO_2$; alkoxy-carbonyl with 1 to 4 C atoms in the alkoxy radical; $-SO_2N(C_1\text{-}C_4\text{-alkyl})(C_1\text{-}C_4\text{-alkyl})$; or alkoxy-sulphonyl with 1 to 4 C atoms in the alkoxy radical; $X^{20}$ denotes -H; -Cl; -Br; -CN; or $-NO_2$;

$X^{21}$ denotes -H; -Cl; or -Br; $X^{22}$ denotes $-NO_2$ or -Cl; $X^{23}$ denotes -H; -F; -Cl; -Br; or alkyl with 1 to 4 C atoms; $X^{24}$ denotes -H; -Cl; alkyl with 1 to 4 C atoms; or alkoxy with 1 to 4 C atoms; $X^{25}$ denotes -CN; or alkoxycarbonyl with 1 to 4 C atoms, which can be substituted by alkoxy with 1 to 4 C atoms, phenoxy or phenyl; $R^5$ denotes -H; alkyl with 1 to 4 C atoms; phenyl; hydroxyphenyl; 1,1-dioxo-tetrahydro-thiophen-3-yl; or alkyl with 2 to 4 C atoms, substituted by phenylaminocarbonyloxy; $R^7$ denotes -H; alkyl with 1 to 4 C atoms; benzyl; $(C_1\text{-}C_4)$-alkoxy-carbonyl-$(C_1\text{-}C_4)$alkyl; or alkyl with 2 to 4 C atoms, which is preferably substituted in the end position by hydroxyl, $(C_1\text{-}C_4\text{-alkyl})$carbonyloxy, -CN, -Cl, phenyl, $C_1\text{-}C_4$-alkoxy, phenoxy, $(C_1\text{-}C_4\text{-alkoxy})$-carbonyloxy or phenoxy-$(C_1\text{-}C_4)$-alkyl)-carbonyloxy; $R^8$ has one of the meanings of $R^7$, with the exception of -H, and moreover also denotes phenyl or benzyl; $R^9$ and $R^{10}$ denote -H; or alkyl with 1 to 4 C atoms; $R^{11}$ denotes 2-(phenoxy)ethyl; 2-(cyclohexyl- or cyclopentylphenoxy)-ethyl; 2-(dichloropenylaminocarbonyloxy)-ethyl; 2-(phenylaminocarbonyloxy)-ethyl; 2-chloro-ethyl or $-(CH_2)_2$-S-benzo-thiazol-2-yl; and $Z^3$ denotes alkyl with 1 to 4 C atoms; or $-CONH_2$.

8. Mixture of yellow disperse dyestuffs according to one or more of Claims 1 to 7, characterized in that $X^1$ denotes -H; -Cl; -F; methyl or methoxy; $X^2$ denotes -H; -Cl; $-NO_2$ or methyl; $X^3$ denotes -H; methyl; methoxy; ethoxy; -F; -Cl or -Br; $X^4$ denotes -H; -Cl; methyl; $-NO_2$; $-COOC_2H_5$; $-COO(CH_2)_2OCH_3$ or $-COO(CH_2)_2OC_2H_5$; $X^5$ denotes -H; -Cl; methyl or methoxy; $X^6$ denotes -H; -Cl; $-NO_2$; methyl; $-SO_2NH_2$; $-CONH(C_2\text{-}C_8\text{-alkyl})$; $-COO(C_2\text{-}C_8\text{-alkyl})$; $-SO_2NH(C_2\text{-}C_8\text{-alkyl})$; furyl-methoxycarbonyl; $-COO(CH_2)_2\text{-}OCH_2CH=CH_2$; benzylcarbonyloxy; $-OSO_2\text{-}C_6H_5$; $-OSO_2\text{-}N(CH_3)_2$, or $-CO\text{-}C_6H_5$, it also being possible for the phenyl radical to be substituted by alkyl with 1 to 4 C atoms; $-COOCH_2C_6H_5$; $-COO(CH_2)_2O(CH_2)_2\text{-}OCH$; $X^7$, $X^8$, $X^9$ and $X^{13}$ denote -H; or methyl; $X^{10}$ denotes -H; methyl or methoxy;

$X^{11}$ denotes -H; methyl; methoxy; -Cl; or -OH; or $X^{10}$ and $X^{11}$ together denote

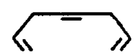 ;

$X^{12}$ denotes -H; methyl; methoxy; $-NO_2$; -OH, 2-hydroxy-ethoxy; or acetylamino; $X^{14}$ denotes -H; methyl; methoxy; $-NO_2$; $-COOCH_3$; $-SO_2N(C_1\text{-}C_2\text{-alkyl})\text{-}(C_1\text{-}C_2\text{-alkyl})$; $X^{15}$ denotes -H; $-NO_2$; -Cl; or phenylazo; $X^{16}$ denotes -H; $-NO_2$; or phenylazo; $X^{17}$ denotes -H; or methyl; $X^{18}$ denotes -H; -Cl; methyl; or acetylamino; $X^{19}$ denotes $-NO_2$; methoxycarbonyl or dimethylaminosulphonyl; $X^{20}$ denotes -H; -Cl; -Br; or -CN; $X^{21}$ denotes -H; -Cl; or -Br; $X^{22}$ denotes $-NO_2$; $X^{23}$ denotes -H; -Cl; or -Br; $X^{24}$ denotes -H; -Cl; methyl; or methoxy; $X^{25}$ denotes -CN; $R^5$ denotes -H; phenyl; hydroxyphenyl; 2-(Phenylamino-carbonyl)-ethyl; or 1,1-dioxo-tetrahydro-thiophen-3-yl; $R^6$ denotes -H; or methyl; $R^7$ denotes -H; methyl; ethyl; propyl; butyl; 2-hydroxyethyl; 2-cyanoethyl; 2-chloroethyl; 2-acetyloxyethyl; 2-(methoxycarbonyl)ethyl; 2-(phenoxymethylcarbonyloxy)-ethyl; 2-(methylcarbonyloxy)-ethyl; 2-(ethylcarbonyloxy)-ethyl; $R^8$ denotes -H; phenyl; 2-cyanoethyl; 2-hydroxyethyl; 2-(ethylcarbonyloxy)-ethyl or 2-(methoxycarbonyl)-ethyl; $R^{11}$ denotes 2-(phenoxy)-ethyl; 2-(4-cyclohexylphenoxy)-ethyl; 2-(3,4-dichlorophenylaminocarbonyloxy)-ethyl; 2-(phenylamino-carbonyloxy)-ethyl or 2-chloro-ethyl; $Z^3$ denotes methyl; or $-CONH_2$; $Z^4$ denotes -OH; or $NH_2$ and $Z^5$ denotes -H or -Br.

9. Process for the preparation of yellow disperse dyestuffs from one or more of Claims 1 to 8, characterized in that already finished individual dyestuffs of components A and B are mixed with one another or in that unfinished individual dyestuffs of components A and B are mixed with one another and finished subsequently or during mixing.

10. Process for dyeing synthetic fibres, in particular polyester fibres, by the high temperature exhaustion process or by the thermosol process, or for printing synthetic fibres, in particular polyester fibres, characterized in that a dyestuff mixture according to one or more of Claims 1 to 8 is employed.

**Revendications**

1. Mélange de colorants jaunes de dispersion, caractérisé en ce qu'il consiste en les composants A et B de colorants ou en ce qu'il contient ces composants de colorants, le composant A de colorant étant constitué d'un colorant de formule I:

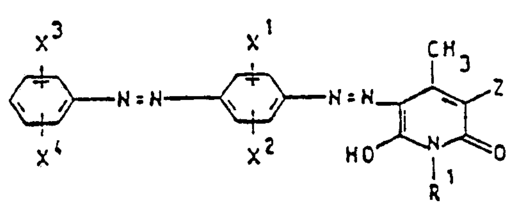

(I)

et le composant B de colorant étant constitué d'un ou plusieurs autres colorants de formule I et/ou d'un ou plusieurs autres colorants jaunes, jaune d'or ou brun-jaune de dispersion, de la série des colorants

monoazoïques, disazoïques ou méthiniques, et $R^1$ représentant -H; un groupe alkyle ayant 1 à 8 atomes de carbone, qui peut être substitué par -Cl, -Br, un reste -CN, phényle, phényle substitué par un reste alkyle en $C_1$-$C_4$, alcoxycarbonyle comportant 1 à 4 atomes de carbone dans le groupe alcoxy (éventuellement substitué par -Cl, -Br, un reste phényle, -CN, alcoxy en $C_1$-$C_4$, alcoxy(en $C_1$-$C_4$)-alcoxy(en $C_2$-$C_4$), phénoxy, alcényloxy(en $C_3$-$C_5$), cyclopentyloxy ou cyclohexyloxy); un groupe alkyle ayant 2 à 4 atomes de carbone [pouvant être substitué par un reste hydroxy, alcoxy ayant 1 à 4 atomes de carbone, alcoxyalcoxy ayant au total 2 à 8 atomes de carbone, phénoxy (éventuellement substitué par un reste alkyle en $C_1$-$C_6$, cyclopentyle ou cyclohexyle), alcényloxy comportant 3 à 5 atomes de carbone, cyclopentyloxy, cyclohexyloxy, furfuryloxy, tétrahydrofurfuryloxy, alkylcarbonyloxy ayant 1 à 4 atomes de carbone dans le groupe alkyle (éventuellement substitué par -Cl, -Br, un reste -Cl, phényle, phénoxy, alcoxy en $C_1$-$C_4$)phénylcarbonyloxy (éventuellement substitué une ou plusieurs fois, indépendamment les unes des autres, par -Cl, -Br, un reste méthyle), un groupe alcoxycarbonyloxy (éventuellement substitué par -Cl, -Br, un reste -CN, phényle, phénoxy, alcoxy en $C_1$-$C_4$), un groupe phénoxycarbonyloxy (éventuellement substitué une ou plusieurs fois, indépendamment les unes des autres, par -Cl, -Br, un reste méthyle), un groupe phénylaminocarbonyloxy (éventuellement substitué une ou plusieurs fois, indépendamment les unes des autres, par -Cl, -Br, un reste méthyle), un groupe monoalkyl- ou dialkyl-aminocarbonyloxy comportant 1 à 4 atomes de carbone dans les restes alkyle (éventuellement substitué par -OH, un reste alcoxy en $C_1$-$C_4$ ou phénoxy dans les restes alkyle)], un groupe alcényle comportant 3 à 5 atomes de carbone; un groupe cyclopentyle; un groupe cyclohexyle; un groupe phényle éventuellement substitué; un groupe phénylamino; un groupe benzyle, furfuryle, tétrahydrofurfuryle, dioxo-1,1 cétrahydro-thiényle-(3);

$Z^1$ représentant -CN ou $CONR^2R^3$;

$X^1$ représentant -H, un groupe alkyle ayant 1 à 4 atomes de carbone (qui peut être substitué par un reste hydroxy ou un reste alcoxy ayant 1 à 4 atomes de carbone); un groupe alcoxy ayant 1 à 4 atomes de carbone; un groupe alcoxy ayant 2 à 4 atomes de carbone (qui est substitué par un reste hydroxy ou un reste alcoxy ayant 1 à 4 atomes de carbone); -F; -Cl; -Br;

$X^2$ représentant -H; un groupe alkyle ayant 1 à 4 atomes de carbone, un groupe alcoxy ayant 1 à 4 atomes de carbone; un groupe alcoxy ayant 2 à 4 atomes de carbone (qui est substitué par un reste hydroxy ou par un reste alcoxy ayant 1 à 4 atomes de carbone);

-F; -Cl; -Br, un groupe alkylcarbonylamino ayant 1 à 4 atomes de carbone dans le reste alkyle; -OH; $-NO_2$; ou bien $X^1$ et $X^2$ formant ensemble:

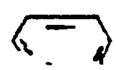

$X^3$ ayant un des sens de $X^1$;

$X^4$ représentant -H; un groupe alkyle ayant 1 à 4 atomes de carbone (qui peut être substitué par un reste hydroxy ou par un reste alcoxy ayant 1 à 4 atomes de carbone); un groupe alcoxy ayant 1 à 4 atomes de carbone; un groupe alcoxy ayant 2 à 4 atomes de carbone (qui est substitué par un reste hydroxy ou un reste alcoxy ayant 1 à 4 atomes de carbone); -F; -Cl; -Br; $-NO_2$; $-CF_3$; -CN; $-CONR^2R^3$; $-COOR^3$; $COR^3$; $-SO_2NR^2R^3$; $-SO_2-OR^3$; $-SO_2-R^3$; $-SO_2NH_2$; un groupe oxadiazole-1,2,4 yle-3 substitué en position 5 par $R^3$;

$R^2$ représentant H, un groupe alkyle ayant 1 à 8 atomes de carbone; un groupe alkyle ayant 2 à 4 atomes de carbone (qui est substitué par un reste hydroxy ou par un reste alcoxy ayant 1 à 4 atomes de carbone ou par un reste alcoxy-alcoxy ayant au total 2 à 8 atomes de carbone ou par un reste allyloxy); un groupe alcényle ayant 3 à 5 atomes de carbone et éventuellement substitué, un groupe phényle ou benzyle éventuellement substitué;

$R^3$ ayant, à l'exclusion de l'hydrogène, l'un des sens de $R^2$ et pouvant en outre représenter un groupe furfuryle ou tétrahydrofurfuryle, le rapport pondéral entre les composants A et B étant de (10 à 90) pour (90 à 10).

2. Mélanges de colorants jaunes de dispersion selon la revendication 1, caractérisé en ce que le rapport pondéral des composants A et B est de (20 à 70) pour (80 à 30).

3. Mélange de colorants jaunes de dispersion selon la revendication 1 et/ou 2, caractérisé en ce que le composant B contient un colorant de formule II:

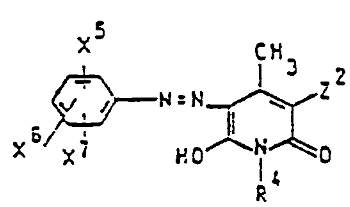

(II)

ou consiste en ce colorant,

$R^4$ ayant l'un des sens de $R^1$,

$Z^2$ ayant l'un des sens de $Z^1$,

$X^5$ ayant l'un des sens de $X^1$,

$X^6$ ayant l'un des sens de $X^4$ et pouvant en outre représenter aussi $-O-SO_2-NR^2R^3$; $-OSO_2r^3$; $-O-CO-R^3$; $-O-COOR^3$,

$X^7$ ayant l'un des sens de $X^1$ et pouvant en outre aussi représenter un groupe phénoxy éventuellement substitué.

4. Mélange de colorants jaunes de dispersion selon une ou plusieurs des revendications 1 à 3, caractérisé en ce que le composant B contient un ou plusieurs autres colorants de formule I ou consiste en un ou plusieurs autres colorants de formule I.

5. Mélange de colorants jaunes de dispersion selon une ou plusieurs des revendications 1 à 4, caractérisé en ce que le composant B consiste en un ou plusieurs colorants répondant aux formules III à IX ou contient ces colorants:

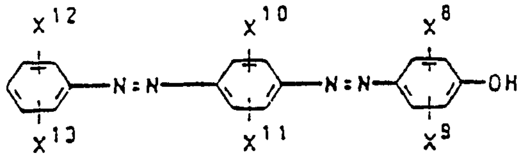

(III)

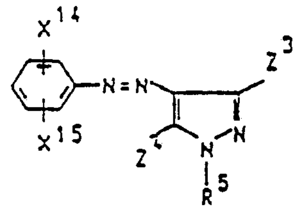

(IV)

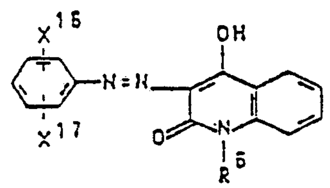

(V)

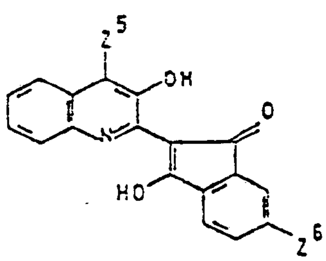

(VI)

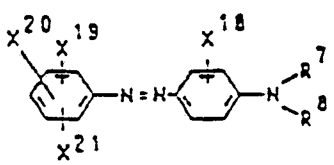

(VII)

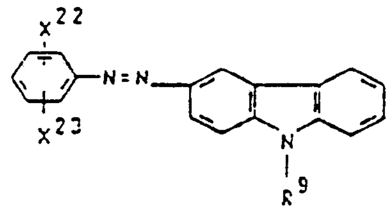

(VIII)

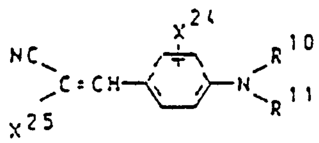

(IX)

formules dans lesquelles:

$R^5$ a l'un des sens de $R^1$;

$R^6$ représente -H; un groupe alkyle ayant 1 à 4 atomes de carbone;

$R^7$ représente -H; un groupe alkyle ayant 1 à 4 atomes de carbone (pouvant être substitué par $-COOR^{12}$, -CN, un reste phényle ou par (Cl); un groupe alkyle ayant 2 à 4 atomes de carbone (substitué par un reste hydroxy, par un reste alcoxy ayant 1 à 4 atomes de carbone, par un reste phénoxy ou par $-OCO-R^{12}$);

$R^8$ a l'un des sens de $R^7$ et peut en outre représenter un groupe phényle;

$R^9$ représente -H; un groupe alkyle ayant 1 à 4 atomes de carbone (pouvant être substitué par $-COOR^{12}$ ou par -CN); un groupe alkyle ayant 2 à 4 atomes de carbone (substitué par un reste hydroxy, par un reste alcoxy ayant 1 à 4 atomes de carbone, par un reste hydroxyalcoxy ayant 2 à 4 atomes de carbone, par un reste alcoxy-alcoxy ayant au total 2 à 8 atomes de carbone, par un reste alcoxy-alcoxyalcoxy ayant au total 3 à 12 atomes de carbone);

$R^{10}$ a l'un des sens de $R^7$;

$R^{11}$ représente -H; un groupe alkyle ayant 1 à 4 atomes de carbone; un groupe alkyle ayant 2 à 4 atomes de carbone (substitué par -C1 ou par le reste Y);

$R^{12}$ représente un groupe alkyle ayant 1 à 4 atomes de carbone; un groupe alkyle ayant 2 à 4 atomes de carbone (substitué par un reste alcoxy ayant 1 à 4 atomes de carbone, par un reste phénoxy, par un reste allyloxy ou par -OH);

$X^8$ a l'un des sens de $X^1$;

$X^9$ représente -H; un groupe alkyle ayant 1 à 4 atomes de carbone;

$X^{10}$ représente -H; un groupe alkyle ayant 1 à 4 atomes de carbone; un groupe alcoxy ayant 1 à 4 atomes de carbone; un groupe alcoxy ayant 2 à 4 atomes de carbone (substitué par -OH, par un reste alcoxy ayant 1 à 4 atomes de carbone); -F; -Cl; -Br;

$X^{11}$ a l'un des sens de $X^{10}$ et peut représenter en outre un groupe alkylcarbonylamino ayant 1 à 4 atomes de carbone dans le reste alkyle, ou bien $X^{10}$ et $X^{11}$ forment ensemble:

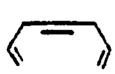

$X^{12}$ a l'un des sens de $X^1$;

$X^{13}$ a l'un des sens de $X^2$;

$X^{14}$ a l'un des sens de $X^6$ et peut représenter en outre un groupe phénoxy éventuellement substitué;

$X^{15}$ a l'un des sens de $X^1$ et peut représenter en outre $-NO_2$ ou un groupe phénylazo;

$X^{16}$ représente -H, un reste $-NO_2$, un groupe alkyle ayant 1 à 4 atomes de carbone, un groupe phénylazo; un groupe phénylazo (substitué dans le noyau phényle une ou deux fois par -C1, $-CH_3$, $-OCH_3$ et/ou $NO_2$);

$X^{17}$ représente -H, -F, -Cl, -Br; un groupe alkyle ayant 1 à 4 atomes de carbone; un groupe alcoxy ayant 1 à 4 atomes de carbone; un groupe alcoxy ayant 2 à 4 atomes de carbone (substitué par un reste alcoxy ayant 1 à 4 atomes de carbone);

$X^{18}$ représente -H; -Cl; -Br; un groupe alkyle ayant 1 à 4 atomes de carbone; un groupe alkylcarbonylamino ayant 1 à 4 atomes de carbone dans le reste alkyle (pouvant éventuellement être substitué par -Cl, -Br, -OH ou par un reste alcoxy ayant 1 à 4 atomes de carbone);

$X^{19}$ représente $-NO_2$, $-CONR^2R^3$; $-SO_2NR^2R^3$; $-SO_2-OR^3$; $-COR^3$; $-COOR^3$; -CN; $-CF_3$;

$X^{20}$ représente -H; $-COOR^3$; -Cl; -Br; -CN; $-NO_2$;

$X^{21}$ représente -H; -Cl; -Br;

$X^{22}$ représente $-NO_2$; $-COOR^3$; $-CONR^2R^3$; $-SO_2NR^2R^3$; $-COR^3$; $-SO_2-OR^3$;

$X^{23}$ représente -H; -F; -Cl; -CN;

$X^{24}$ représente -H; -F; -Cl; -Br; un groupe alkyle ayant 1 à 4 atomes de carbone; un groupe alcoxy ayant 1 à 4 atomes de carbone; un groupe alcoxy ayant 2 à 4 atomes de carbone (substitué par un reste alcoxy ayant 1 à 4 atomes de carbone);

$X^{25}$ représente -CN; -$COOR^3$; $CONR^2R^3$;

Y représente un groupe -O-phényle (le reste phényle pouvant être substitué éventuellement une ou deux fois par un reste cyclopentyle, cyclohexyle, alkyle ayant 1 à 4 atomes de carbone et/ou alcoxy ayant 1 à 4 atomes de carbone, par -C1 et/ou Br); un groupe -CO-phényle (le reste phényle pouvant éventuellement être monosubstitué ou disubstitué par un reste cyclopentyle, cyclohexyle, alkyle ayant 1 à 4 atomes de carbone et/ou alcoxy ayant 1 à 4 atomes de carbone, par -Cl et/ou -Br); un groupe -OCO-phényle (le reste phényle pouvant être monosubstitué ou disubstitué par un reste cyclopentyle, cyclohexyle, alkyle ayant 1 à 4 atomes de carbone et/ou alcoxy ayant 1 à 4 atomes de carbone, par -Cl et/ou -Br); un groupe -COO-phényle (le reste phényle pouvant être monosubstitué ou disubstitué éventuellement par un reste cyclopentyle, cyclohexyle, alkyle ayant 1 à 4 atomes de carbone et/ou alcoxy ayant 1 à 4 atomes de carbone, par -Cl et/ou -Br); un groupe -O-COO-phényle (le reste phényle pouvant être monosubstitué ou disubstitué par un reste cyclopentyle, cyclohexyle, alkyle ayant 1 à 4 atomes de carbone et/ou alcoxy ayant 1 à 4 atomes de carbone, par -Cl et/ou -Br), un groupe -O-phényle (le reste phényle pouvant être monosubstitué ou disubstitué éventuellement par un reste cyclopentyle, cyclohexyle, alkyle ayant 1 à 4 atomes de carbone et/ou alcoxy ayant 1 à 4 atomes de carbone, par -Cl et/ou -Br); un groupe -S-benzothiazolyle(2);

$Z^3$ représente un groupe alkyle ayant 1 à 4 atomes de carbone; -$CONH_2$; -CONH(alkyle en $C_1$-$C_4$); -CON(alkyle en $C_1$-$C_4$)(alkyle en $C_1$-$C_4$);

$Z^4$ représente -OH; -$NH_2$;

$X^5$ représente -H; -Br; -Cl;

$Z^6$ représente -H; -$CONH_2$; -CONH(alkyle en $C_1$-$C_4$); -CON(alkyle en $C_1$-$C_4$)(alkyle en $C_1$-$C_4$).

6. Mélange de colorants jaunes de dispersion selon une ou plusieurs des revendications 1 à 5, caractérisé en ce que le reste $R^1$ représente un groupe alkyle ayant 1 à 8 atomes de carbone; un groupe alkyle ayant 1 à 5 atomes de carbone (qui est substitué par un reste alcoxycarbonyle ayant d'ans le reste alcoxy 1 à 4 atomes de carbone, notamment 1 ou 2 atomes de carbone); un groupe alkyle ayant 2 à 8 atomes de carbone (qui est substitué par un reste hydroxy, alcoxy ayant 1 à 4 atomes de carbone, alhylcarbonyloxy ayant 1 à 4 atomes de carbone, notamment 1 ou 2 atomes de carbone, dans le reste alkyle).

7. Mélange de colorants jaunes de dispersion selon une ou plusieurs des revendications 1 à 6, caractérisé en ce que $X^1$, $X^5$ représentent chacun -H; un groupe alkyle ayant 1 à 4 atomes de carbone; un groupe alcoxy ayant 1 à 4 atomes de carbone, un groupe alcoxy ayant 2 à 4 atomes de carbone (qui est substitué par un reste alcoxy ayant 1 à 4 atomes de carbone); -F; -Cl; -Br; $X^2$ représente -H; un groupe alkyle ayant 1 à 4 atomes de carbone; -Cl; -Br; -$NO_2$ ou bien $X^1$ et $X^2$ peuvent également former ensemble:

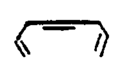

$X^3$ représente -H; un groupe alkyle ayant 1 à 4 atomes de carbone; un groupe alcoxy ayant 1 à 4 atomes de carbone, un groupe alcoxy ayant 2 à 4 atomes de carbone (qui est substitué par un reste alcoxy ayant 1 ou 2 atomes de carbone); -F; -Cl; -Br;

$X^4$ représente -H; -F; -Cl; -Br; -$NO_2$; un groupe alkyle ayant 1 à 4 atomes de carbone; -$COOR^3$, dans lequel $R^3$ représente un reste alkyle ayant 1 à 4 atomes de carbone ou alkyle ayant 2 à 4 atomes de carbone (et qui est substitué par un reste alcoxy ayant 1 à 4 atomes de carbone);

$X^6$ représente -H; -$NO_2$; -Cl; un groupe alkyle ayant 1 à 4 atomes de carbone; un groupe alkyle ayant 2 à 4 atomes de carbone (substitué par un reste alcoxy ayant 1 à 4 atomes de carbone ou par un reste allyloxy); -$SO_2NR^2R^3$; -$COR^3$; -$CONR^2R^3$; -$SO_2NH_2$; -$COOR^3$; -$OSO_2R^3$; -OCO-$R^3$; -$OSO_2NR^2R^3$;

$x^7$ représente -H; un groupe alkyle ayant 1 à 4 atomes de carbone; un groupe phénoxy;

$x^8$ représente -H; un groupe alkyle ayant 1 à 4 atomes de carbone; -CL; -Br; un groupe alcoxy ayant 1 à 4 atomes de carbone; un groupe alcoxy ayant 2 à 4 atomes de carbone (qui est substitué par un reste hydroxy ou par un reste alcoxy ayant 1 à 4 atomes de carbone);

$X^9$ représente -H; -Cl; un groupe alkyle ayant 1 à 4 atomes de carbone;

$x^{10}$ représente -H; un groupe alkyle ayant 1 à 4 atomes de carbone; un groupe alcoxy ayant 1 à 4 atomes de carbone; un groupe alcoxy ayant 2 à 4 atomes de carbone (substitué par un reste alcoxy ayant 1 à 4 atomes de carbone);

$x^{11}$ est tel que $x^{10}$ et peut représenter en outre -Cl; OH ou bien $X^{10}$ et $X^{11}$ peuvent former également ensemble:

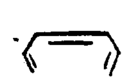

$X^{12}$ représente -H; -$NO_2$; -OH; un groupe alkyle ayant 1 à 4 atomes; un groupe alcoxy ayant 1 à 4 atomes de carbone; un groupe hydroxyalcoxy ayant 2 à 4 atomes de carbone, un groupe alkylcarbonylamino ayant 1 à 4 atomes de carbone dans le reste alkyle;

$X^{13}$ représente -H; un groupe alkyle ayant 1 à 4 atomes de carbone;

$X^{14}$ représente -H; $-NO_2$; un groupe alkyle ayant 1 à 4 atomes de carbone; un groupe alcoxy ayant 1 à 4 atomes de carbone; $-COOR^3$; $-SO_2NR^2R^3$;

$X^{15}$ représente -H; $-NO_2$; -Cl; un groupe phénylazo;

$X^{16}$ représente -H; $-NO_2$; un groupe phénylazo; un groupe alkyle ayant 1 à 4 atomes de carbone;

$X^{17}$ représente -H; -Cl; -Br; -F; un groupe alkyle ayant 1 à 4 atomes de carbone; un groupe alcoxy ayant 1 à 4 atomes de carbone;

$x^{18}$ représente -H; -Cl; un groupe alkyle ayant 1 à 4 atomes de carbone; un groupe alkylcarbonylamino ayant 1 à 4 atomes de carbone dans le reste alkyle, qui peut être substitué par un reste alcoxy ayant 1 à 4 atomes de carbone;

$X^{19}$ représente $-NO_2$; un groupe alcoxy-carbonyle ayant 1 à 4 atomes de carbone dans le reste alcoxy; $-SO_2N$(alkyle en $C_1$-$C_4$) (alkyle en $C_1$-$C_4$); un groupe alcoxysulfonyle ayant 1 à 4 atomes de carbone dans le reste alcoxy;

$X^{20}$ represente -H; -Cl; -Br; -CN; $-NO_2$;

$X^{21}$ represente -H; -Cl; -Br;

$X^{22}$ représente $-NO_2$-; -Cl;

$X^{23}$ représente -H, -F; -Cl; -Br; un groupe alkyle ayant 1 à 4 atomes de carbone;

$X^{24}$ représente -H; -Cl; un groupe alkyle ayant 1 à 4 atomes de carbone; un groupe alcoxy ayant 1 à 4 atomes de carbone;

$X^{25}$ représente -CN; un groupe alcoxycarbonyle ayant 1 à 4 atomes de carbone qui peut être substitué par un reste alcoxy ayant 1 à 4 atomes de carbone, par un reste phénoxy ou phényle;

$R^5$ représente -H; un groupe alkyle ayant 1 à 4 atomes de carbone; un groupe phényle; un groupe hydroxyphényle; un groupe dioxo-1,1 tétrahydrothiophényle-3; un groupe alkyle ayant 2 à 4 atomes de carbone, substitué par un reste phénylaminocarbonyloxy;

$R^7$ représente -H; un groupe alkyle ayant 1 à 4 atomes de carbone; un groupe benzyle, un groupe alcoxy(en $C_1$-$C_4$)-carbonyle-alkyl (en $C_1$-$C_4$); un groupe alkyle ayant 2 à 4 atomes de carbone (qui est substitué, avantageusement en position terminale par un reste hydroxy, alkyl(en $C_1$-$C_4$)-carbonyloxy, -CN, -Cl, par un reste phényle, alcoxy(en $C_1$-$C_4$), phénoxy, alcoxy(en $C_1$-$C_4$)-carbonyloxy ou par un reste phénoxy-alkyl(en $C_1$-$C_4$)-carbonyloxy)

$R^8$ a, à l'exclusion de -H, l'un des sens de $R^7$ et peut représenter en outre aussi un groupe phényle ou benzyle;

$R^9$ et $R^{10}$ representent chacun -H; un groupe alkyle ayant 1 à 4 atomes de carbone;

$R^{11}$ représente un groupe (phénoxy)-2 éthyle; un groupe cyclohexylou cyclopentyl-phénoxy-2 éthyle; un groupe (di-chlorophénylamino-carbonyloxy)-2 éthyle; un groupe (phénylaminocarbonyloxy)-2 éthyle; un groupe chloro-2 éthyle; un groupe $-(CH_2)$-2-S-benzothiazolyle(2);

$Z^3$ représente un groupe alkyle ayant 1 à 4 atomes de carbone; $-CONH_2$.

8. Mélange de colorants jaunes de dispersion selon une ou plusieurs des revendications 1 à 7, caractérisé en ce que:

$X^1$ représente -H; -Cl; -F; un groupe méthyle; un groupe méthoxy;

$X^2$ représente -H; -Cl; $-NO_2$; un groupe méthyle;

$X^3$ représente -H; un groupe méthyle, un groupe méthoxy; un groupe éthoxy; -F; -Cl; -Br;

$X^4$ représente -H; -Cl; un groupe méthyle; $-NO_2$; $-COOCH_3$; $-COOC_2H_5$; $-COO(CH_2)_2OCH_3$; $-COO(CH_2)_2OC_2H_5$;

$X^5$ représente -H; -Cl; un groupe méthyle ou methoxy;

$x^6$ représente -H; -Cl; $-NO_2$; un groupe méthyle; $-SO_2NH_2$; -CONH(alkyle en $C_2$-$C_8$); -COO(alkyle en $C_2$-$C_8$); $-SO_2NH$(alkyle en $C_2$-$C_8$); un groupe furylméthyloxycarbonyle; $-COO(CH_2)_2OCH_2CH=CH_2$; benzylcarbonyloxy; $-OSO_2-C_6H_5$; $-OSO_2-N(CH_3)_2$; $-CO-C_6H_5$, (le reste phényle pouvant éventuellement aussi être substitué par un reste alkyle ayant 1 à 4 atomes de carbone); $-COOCH_2C_6H_5$; $-COO(CH_2)_2O(CH_2)_2OCH_3$;

$X^7$, $X^8$, $X^9$, $X^{13}$ représentent -H; un groupe méthyle;

$X^{10}$ représente -H; un groupe méthyle ou méthoxy;

$X^{11}$ représente -H; un groupe méthyle ou méthoxy; -Cl, -OH, ou bien $X^{10}$ et $X^{11}$ forment ensemble:

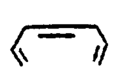

$X^{12}$ représente -H; un groupe méthyle; un groupe méthoxy; $-NO_2$, -OH; un groupe hydroxy-2 éthoxy; un groupe acétylamino;

$x^{14}$ représente -H; un groupe méthyle, un groupe méthoxy, $-NO_2$; $-COOCH_3$; $-SO_2N$(alkyle en $C_1$-$c_2$)-(alkyle en $C_1$-$C_2$);

$x^{15}$ représente -H; $-NO_2$; -Cl; un groupe phénylazo;

$X^{16}$ représente -H; $-NO_2$; un groupe phénylazo;

$X^{17}$ représente -H; un groupe méthyle;

$X^{18}$ représente -H, -Cl; un groupe méthyle ou acétylamino;

$X^{19}$ représente $-NO_2$; un groupe méthoxycarbonyle ou diméthylamino sulfonyle;

$X^{20}$ représente -H; -Cl; -Br; -CN;

$X^{21}$ représente -H; -Cl; -Br;

$X^{22}$ représente $-NO_2$;
$X^{23}$ représente H; -Cl; -Br;
$X^{24}$ représente -H; -Cl; un groupe méthyle ou méthoxy;
$X^{25}$ représente -CN;
$R^5$ représente -H; un groupe phényle; un groupe hydroxyphényle; un groupe (phénylaminocarbonyl)-2 éthyle; un groupe dioxo-1,1 tétrahydro-thiophène-yle-3;
$R^6$ represente -H; un groupe méthyle;
$R^7$ represente -H; un groupe méthyle; éthyle, propyle, butyle, hydroxy-2 éthyle; cyano-2 éthyle; chloro-2 éthyle; acétyloxy-2 éthyle; (méthoxycarbonyl)-2 éthyle; (phénoxyméthylcarbonyloxy)-2 éthyle; (méthylcarbonyloxy)-2 éthyle; (éthylcarbonyloxy)-2 éthyle;
$R^8$ représente -H; un groupe phényle; un groupe cyano-2 éthyle; hydroxy-2 éthyle; (éthylcarbonyloxy)-2 éthyle; (méthoxycarbonyl)-2 éthyle;
$R^{11}$ représente un groupe (phénoxy)-2 éthyle; (cyclohexyl-4 phénoxy)-2 éthyle; (dichloro-3,4 phénylaminocarbonyloxy)-2 éthyle; (phénylamino-carbonyloxy)-2 éthyle; chloro-2 éthyle;
$Z^3$ représente un groupe méthyle ou $-CONH_2$;
$Z^4$ représente -OH; $-NH_2$;
$Z^5$ représente -H ou -Br.

9. Procédé pour préparer des colorants jaunes de dispersion d'une ou plusieurs des revendications 1 à 8, caractérisé en ce qu'on mélange des colorants individuels déjà terminés des composants A et B ou bien en ce qu'on mélange les uns avec les autres des colorants individuels non terminés des composants A et B et on les termine ensuite ou pendant l'opération de mélangeage.

10. Procédé pour teindre des fibres synthétiques, en particulier des fibres de polyester, selon le procédé par épuisement à température élevée ou selon le procédé avec traitement thermosol, ou pour imprimer des fibres de synthèse, en particulier des fibres de polyester, procédé caractérisé en ce qu'on utilise un mélange de colorants selon une ou plusieurs des revendications 1 à 8.